# EUROPEAN PATENT SPECIFICATION

(11) **EP 3 330 178 B1**
(45) Date of publication and mention of the grant of the patent: **14.10.2020**
(21) Application number: 17205341.5
(22) Date of filing: 05.12.2017
(51) Int. Cl.: B64C 39/02, G05D 1/00, H04N 5/232

(54) **CONTROL DEVICE AND METHOD FOR UNMANNED ARIAL PHOTOGRAPHY VEHICLE**
STEUERUNGSVORRICHTUNG UND VERFAHREN FÜR UNBEMANNTES PHOTOFLUGGERÄT
DISPOSITIF DE COMMANDE ET PROCÉDÉ POUR UN VÉHICULE DE PHOTOGRAPHIE AÉRIENNE SANS PILOTE

(30) Priority: 05.12.2016 KR 20160164415
(43) Date of publication of application: 06.06.2018
(73) Proprietor: Samsung Electronics Co., Ltd., Gyeonggi-do 16677 (KR)
(72) Inventor: LEE, Jong-Kee, 16677 Suwon-si, Gyeonggi-do, 16677 (KR); NA, Su-Hyun, 16677 Suwon-si, Gyeonggi-do, 16677 (KR); MOON, Choon-Kyoung, 16677 Suwon-si, Gyeonggi-do, 16677 (KR); YOO, Eun-Kyung, 16677 Suwon-si, Gyeonggi-do, 16677 (KR); LEE, Olivia, 16677 Suwon-si, Gyeonggi-do, 16677 (KR); CHUNG, Hee-Young, 16677 Suwon-si, Gyeonggi-do, 16677 (KR)
(74) Representative: HGF

(56) References cited:
- WO-A1-2016/130994
- WO-A1-2016/145411
- WO-A1-2016/161426
- US-A1- 2016 139 595
- US-A1- 2016 327 950

## Description

### TECHNICAL FIELD

The present disclosure relates to an electronic device for controlling an unmanned photography device and a method of controlling the same. More particularly, the present disclosure relates to an electronic device for controlling a moving path of an unmanned photography device based on an image and a method of controlling the same.

### BACKGROUND

An unmanned photography device may take pictures or videos in response to radio control signals. Among unmanned photography devices, a drone (or a radio flying object) may be a flying object in the form of an airplane or a helicopter that flies by the induced radio waves without a person riding thereon. Such a drone was originally developed for military purposes, such as reconnaissance or monitoring, but the use thereof has at present expanded to the delivery of products or the capture of pictures or images.

Published US patent application US 2016/139595 describes a mobile terminal and controlling method for exchanging data with at least one drone via a communication module. The drone has a camera for obtaining images or video, which in turn may be transmitted to the mobile terminal. The terminal includes a display module configured to output a screen for controlling a motion of the drone, a touch interface module configured to receive a random touch drag within the displayed screen, and a controller controlling the communication module, the display module and the touch interface module. US 2016/327950 A discloses gesture control of a drone equipped with a camera as well as image based following of a subject.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of setting and transmitting a moving path of the unmanned photography device based on an image pre-taken by the electronic device and taking an image at a location desired by the user through the unmanned photography device.

In order to control an unmanned photography device (or a drone) according to the prior art, a control device in the form of a joystick or a smart phone touch button may be used. In this case, the user may move the unmanned photography device to a desired location through an operation stick or an operation button for controlling upward/downward pitch or leftward/rightward roll. According to a method of taking an image through an unmanned photography device according to the prior art, the user may have difficulty in that the user is required to determine a movement direction and altitude of the unmanned photography device by precisely controlling an operation device in order to take an image or a moving image in the composition that the user desires through the unmanned photography device.

In accordance with an aspect of the present disclosure, an electronic device for controlling an unmanned photography device is provided. The electronic device includes a display for displaying one or more images, a memory, and at least one processor electrically connected to the display and the memory, wherein the at least one processor is configured to control the display to display a first image on the display, derive photography information contained in the first image selected based on a signal input for selecting the first image, and select information on the location, at which the first image is taken, contained in the photography information as at least one point of a moving path of the unmanned photography device.

In accordance with another aspect of the present disclosure, a method of controlling an electronic device for controlling an unmanned photography device is provided. The method includes displaying a first image on a display, deriving photography information contained in the first image selected based on an external signal input for selecting the first image, and selecting information on the location, at which the first image is taken, contained in the derived in the photography information as at least one point of a moving path of the unmanned photography device.

In accordance with another aspect of the present disclosure, a non-transitory computer-readable storage medium configured to store one or more computer programs including instructions, that, when executed by at least one processor, causes the at least one processor to perform a method of controlling an electronic device for controlling an unmanned photography device is provided. The method includes displaying a first image on a display, deriving photography information contained in the first image selected based on an external signal input for selecting the first image, and selecting information on a location at which the first image is taken, contained in the derived in the photography information as at least one point of a moving path of the unmanned photography device.

Through a method of controlling an unmanned photography device using an electronic device according to various embodiments of the present disclosure, a user can take an image having the composition that the user desires only through simple and intuitive control based on a taken image without requiring the user to learn a complicated method of handling the unmanned photography device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of the present disclosure will be more apparent from the following detailed description taken in conjunction with the accompanying drawings, in which:
FIGS. 1A, 1B, and 1C illustrate a process of displaying an image in an electronic device and configuring a moving path of an unmanned photography device by selecting the displayed image according to an embodiment of the present disclosure;
FIG. 2 illustrates autonomous flight of an unmanned aerial vehicle (UAV) that receives information on a destination point from the electronic device according to an embodiment of the present disclosure;
FIG. 3 schematically illustrates the configuration of the electronic device according to an embodiment of the present disclosure;
FIG. 4 illustrates the configuration of the unmanned photography device according to an embodiment of the present disclosure;
FIG. 5 is a perspective view illustrating the appearance of the unmanned photography device according to an embodiment of the present disclosure;
FIG. 6 illustrates the operation of the unmanned photography device according to an embodiment of the present disclosure;
FIGS. 7A and 7B illustrate examples of controlling the movement of the unmanned photography device according to an embodiment of the present disclosure;
FIGS. 8A, 8B, and 8C illustrate the operation of controlling movement of the unmanned photography device using an electronic device according to an embodiment of the present disclosure;
FIGS. 9A and 9B illustrate a process of displaying a 360-degree image in the electronic device and setting a moving path of the unmanned photography device by selecting the displayed image according to an embodiment of the present disclosure;
FIGS. 10A, 10B, and 10C illustrate a process of displaying a 360-degree image in the electronic device and setting a moving path of the unmanned photography device by enlarging and then selecting the displayed image according to an embodiment of the present disclosure;
FIGS. 11A, 11B, and 11C illustrate a process of displaying a moving image in the electronic device and setting a moving path of the unmanned photography device by selecting the displayed moving image according to an embodiment of the present disclosure;
FIGS. 12A, 12B, and 12C illustrate a process of selecting a photography option while setting a moving path of the unmanned photography device by the electronic device according to an embodiment of the present disclosure;
FIGS. 13A, 13B, and 13C illustrate a process of displaying an image selected from a plurality of images and a location at which the selected image is taken and setting the location at which the image is taken as a moving path of the unmanned photography device by the electronic device according to an embodiment of the present disclosure;
FIG. 14 is a flowchart illustrating a flight path of the unmanned photography device by the electronic device according to an embodiment of the present disclosure;
FIG. 15 illustrates an electronic device within a network environment according to an embodiment of the present disclosure;
FIG. 16 is a block diagram illustrating an electronic device according to an embodiment of the present disclosure; and
FIG. 17 is a block diagram illustrating a program module according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely object. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The expression "configured to" as used in various embodiments of the present disclosure may be interchangeably used with, for example, "suitable for", "having the capacity to", "designed to", "adapted to", "made to", or "capable of" in terms of hardware or software, according to circumstances. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

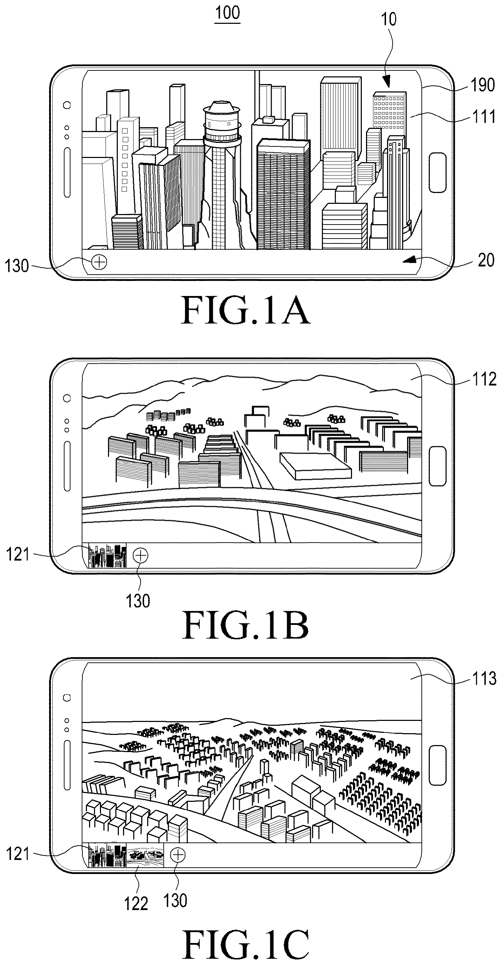

FIGS. 1A to 1C illustrate a process of displaying an image in an electronic device and configuring a moving path of an unmanned photography device by selecting the displayed image according to an embodiment of the present disclosure.

Referring to FIGS. 1A to 1C, an electronic device 100 according to an embodiment may include, for example, at least one of a smart phone, a tablet PC, a mobile phone, a video phone, an electronic book reader, a desktop PC, a laptop PC, a netbook computer, a workstation, a server, a personal digital assistant (PDA), a portable multimedia player (PMP), a Moving Picture Experts Group (MPEG-1 or MPEG-2) audio layer 3 (MP3) player, a medical device, a camera, and a wearable device. The wearable device may include at least one of an accessory type (for example, a watch, a ring, a bracelet, an anklet, a necklace, glasses, a contact lens, or a head-mounted device (HMD)), a fabric- or clothing-integrated type (for example, an electronic garment), a body-mounted type (for example, a skin pad or tattoo), and a bio-implantable circuit. Hereinafter, it is assumed that the electronic device 100 is a smart phone.

Referring to FIGS. 1A to 1C, the electronic device 100 may display a first (a) image 111 on a display 190. The electronic device 100 may read image data pre-stored in memory and display the first (a) image 111 on the display 190. Further, the electronic device 100 may download image data from an external electronic device (for example, a server or another electronic device), which can perform communication, and display the first (a) image 111 on the display 190.

According to an embodiment, the electronic device 100 may display the first (a) image 111 in a first area 10 of the display 190. The electronic device 100 may display a selection icon 130 in a second area 20 of the display 190. A user may select the first (a) image 111 displayed in the first area 10 through the selection icon 130.

For example, in the state in which the first (a) image 111 is displayed in the first area 10, the electronic device 100 may generate a second (a) image 121, which is the same as the first (a) image 111 but smaller than the first (a) image 111, based on an external signal input of touching the selection icon 130, and display the generated second (a) image 121 in the second area 20. However, the method of selecting the first (a) image 111 is not limited thereto.

For example, the electronic device 100 may display the second (a) image 121 in the second area 20 based on an external signal input of touching the first (a) image 111 displayed in the first area 10. Further, the electronic device 100 may display the second (a) image 121 in the second area 20 based on an external signal input of touching the first (a) image 111 displayed in the first area 10 and dragging the touched first (a) image 111 to the second area 20.

In addition, the electronic device 100 may display the second (a) image 121 in the second area 20 based on an external signal input of selecting a separate physical key (not shown) in the state in which the first (a) image 111 is displayed in the first area 10.

Referring to FIGS. 1A to 1C, the electronic device 100 may display the second (a) image 121 in the second area 20. In this state, the electronic device 100 may display a first (b) image 112 in the first area 10 based on an external signal input. For example, the electronic device 100 may display the first (b) image 112 instead of the first (a) image 111 based on an external signal input of touching and dragging the first (a) image 111 in leftward and rightward directions or upward and downward directions. However, the method by which the electronic device 100 displays the first (b) image 112 is not limited thereto. For example, the electronic device 100 may display the first (b) image 112 in the first area 10 based on a separate physical key button input in the state in which the first (a) image 111 is displayed in the first area 10.

According to an embodiment, the electronic device 100 may display the selection icon 130 near the second (a) image 121. The user may select the first (b) image 112 displayed in the first area 10 through the selection icon 130. In the state in which the first (b) image 112 is displayed in the first area 10, the electronic device 100 may generate a second (b) image 122, which is smaller than the first (b) image 112, based on an external signal input of touching the selection icon 130, and display the generated second (b) image 122 in the second area 20.

Referring to FIGS. 1A to 1C, the electronic device 100 may display the second (a) image 121 and the second (b) image 122 in the second area 20. In this state, the electronic device 100 may display a first (c) image 113 in the first area 10 based on an external signal input. For example, the electronic device 100 may display the first (c) image 113 instead of the first (b) image 112 based on an external signal input of touching and dragging the first (b) image 112 in leftward and rightward directions or upward and downward directions.

According to an embodiment, the electronic device 100 may display the selection icon 130 near the second (a) image 121 and the second (b) image 122. The user may select the first (c) image 113 displayed in the first area 10 through the selection icon 130. In the state in which the first (c) image 113 is displayed in the first area 10, the electronic device 100 may generate an image (not shown), which is the same as the first (c) image 113 but smaller than the first (c) image 113, based on an external signal input of touching the selection icon 130 and display the generated image in the second area 20.

The electronic device 100 according to an embodiment may end the display of the pre-selected second (a) image 121 and second (b) image 122. For example, when the second (a) image 121 or the second (b) image 122 is touched for a long time, the electronic device 100 may display a user interface for identifying the end of the display and end the display of the selected image based on a user's selection.

Hereinafter, it is assumed that the first (a) image 111, the first (b) image 112, and the first (c) image 113 are included in a first image, and the second (a) image 121 and the second (b) image 122 are included in a second image. The electronic device 100 may display at least one image in the second area 20 through the processes illustrated in FIGS. 1A to 1C. The electronic device 100 may derive photography information related to the second image displayed in the second area 20.

The photography information may include photography setting values, for example, an aperture value, an exposure time, and sensitivity. Further, the photography information may include, for example, latitude, longitude, and altitude information used by a global positioning system (GPS) at the time point at which the photography device, which took the first image, took the first image. In addition, the photography information may include, for example, latitude, a position of the photography device, which may be acquired based on a terrestrial magnetism sensor or a gyro sensor at the time point at which the photography device, which took the first image, took the first image, a direction of a camera included in the photography device, and a slope of the photography device.

According to an embodiment, the photography information may be included in an image file. For example, in the case of an image file in a joint photographic coding experts group (JPEG) format, photography information may be stored in a header as metadata.

The electronic device 100 may generate the second image based on a signal for selecting the first image displayed in the first area 10, simultaneously or sequentially collect photography information of the first image, and store the collected photography information in the memory.

The electronic device 100 may collect location information of the photography device that took the first image based on the collected photography information. According to an embodiment, the electronic device 100 may insert the collected location information into at least one point of the moving path of the unmanned photography device. Further, the electronic device 100 may collect photography setting values used for taking the first image based on the collected photography information. The electronic device 100 may transmit the collected photography setting values to the unmanned photography device. The unmanned photography device may photograph an image with the same composition, exposure value, sensitivity, and viewing angle as those of the first image at the targeted point (for example, the location at which the first image is taken) based on the transmitted photography setting values.

According to an embodiment, the electronic device 100 may exclude the location information of the first image related to the second image from the moving path of the unmanned photography device based on the end of the display of the second image displayed in the second area 20.

The unmanned photography device may be, for example, an unmanned moving device equipped with a camera. The unmanned photography device may be an unmanned aerial vehicle, a driverless car, or a robot. Hereinafter, it is assumed that the automated photography device is an unmanned flying device equipped with a camera.

The term "Unmanned Aerial Vehicle" or "uninhabited aerial vehicle" (UAV) may refer to a flying object that flies under the ground control without a pilot or recognizes the surrounding environment (for example, obstacles or courses) according to a previously input program or by itself to autonomously fly.

According to various embodiments, when the photography device that took the first image is a UAV, the photography information may include a larger amount of information. For example, the photography information may include location information (for example, roll, pitch, and yaw information) of the UAV at the time point at which the first image is taken. The roll, pitch, and yaw information may include movement information in X, Y, and Z axes of the UAV, inclination information, and rotation information, respectively. Further, the photography information may include location information (for example, roll, pitch, and yaw information) of a gimbal mounted to the UAV.

According to an embodiment, the gimbal may include a camera or may be integrated with the camera. The gimbal may operate for stable image photography by allowing the camera to remain at a constant inclination regardless of the movement of the UAV.

The electronic device 100 may transmit the moving path including the location information derived through the process to the UAV. For example, the electronic device 100 may transmit the moving path to the UAV through wired or wireless communication.

The wireless communication may include, for example, cellular communication that uses at least one of long-term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM), or the like. Further, the wireless communication may include a short-range communication method, for example, Bluetooth (BT) or near field communication (NFC). The wired communication may include, for example, at least one of a universal serial bus (USB) and a high-definition multimedia interface (HDMI).

The UAV may move to the above-described point. For example, after moving to the above-described point through autonomous flying, the UAV may return to the start point. The autonomous flying may refer to, for example, an operation of the UAV flying based on destination information transmitted from the electronic device.

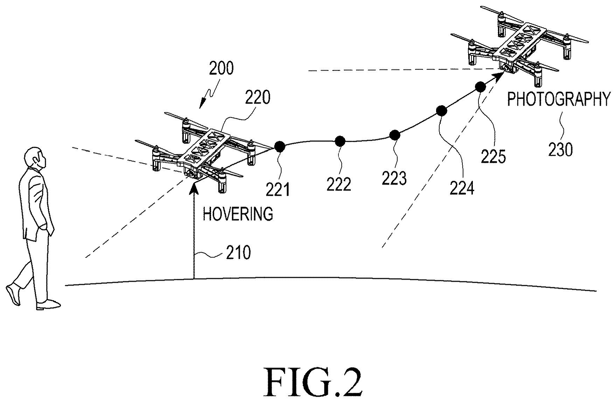

FIG. 2 illustrates autonomous flying of the UAV that receives information on a targeted point from the electronic device according to an embodiment of the present disclosure.

Referring to FIG. 2, an unmanned photography device 200 according to an embodiment may perform a photography operation by itself without receiving direct control from the user. For example, the unmanned photography device may be the UAV 200. When receiving flight data containing a destination point and photography setting values from the electronic device 100, the unmanned photography device 200 may generate a movement control signal based on the received flight data and autonomously fly based on the movement control signal. For example, the unmanned photography device 200 may autonomously fly to photograph an image having the same photography setting values as those of the first (a) image 111.

The unmanned photography device 200 may move to a proper composition location at which an image having the destination composition can be taken based on the received flight data and then automatically photograph the image. The photography setting values transmitted from the electronic device 100 may contain an aperture value, an exposure time, sensitivity, viewing angle information, the orientation of the photography device, and inclination information of the photography device.

When receiving the photography information from the electronic device 100, the unmanned photography device 200 according to an embodiment may execute a photography mode. The photography mode may be set by the electronic device 100 or may be set by the unmanned photography device 200. For example, when receiving the photography information, the unmanned photography device 200 may set the photography mode and perform the photography operation while autonomously flying based on composition information of the image acquired through the camera module.

When the photography mode is set, the unmanned photography device 200 may take off (for example, vertically rise) in order to take the same image as the first (a) image 111 in operation 210. When the unmanned photography device 200 takes off and reaches a preset height, the unmanned photography device 200 may identify current location information (for example, latitude, longitude, and altitude) and position information (for example, movement information in X, Y, and Z axes, inclination information, and rotation information) while hovering in operation 220.

The unmanned photography device 200 according to an embodiment may recognize a subject and then autonomously fly up to a location at which a targeted image can be taken based on the flight data containing the targeted point and the photography setting values transmitted from the electronic device 100. For example, in operations 221 to 225, the unmanned photography device 200 may change the altitude and distance of the unmanned photography device 200 while adjusting the photography composition in consideration of the viewing angle.

When the unmanned photography device 200 reaches a location that matches the targeted point while autonomously flying, the unmanned photography device 200 may take an image having the same photography setting values as those of the first (a) image 111 in operation 230.

For example, when the unmanned photography device 200 reaches the targeted point, the unmanned photography device 200 may adjust the photographing direction of the unmanned photography device 200 based on the movement information in X, Y, and Z axes, the inclination information, and the rotation information of the photography device, among the photography information contained in the flight data.

When the photographing direction is adjusted, the unmanned photography device 200 may photograph the subject based on the photography setting values of the photography information contained in the flight data. For example, the unmanned photography device 200 may configure the camera module to have the same aperture value, exposure time, sensitivity, and viewing angle as those of the first (a) image 111 and photograph the subject.

As described above, the unmanned photography device 200 according to an embodiment may photograph the subject based on the photography setting values of the pre-taken image and the same location, direction, and inclination information as those of the photography device that took the pre-taken image. Accordingly, the user may easily photograph a targeted image without any control to minutely adjust the unmanned photography device 200 and change the photography setting values.

After performing automated photographing, the unmanned photography device 200 may transmit the taken image to the electronic device 100. Further, after the photographing ends, the unmanned photography device 200 may return to the location at which the unmanned photography device 200 started flying autonomously. However, the present disclosure is not limited thereto. For example, after ending the photographing, the unmanned photography device 200 may wait to receive a signal from the electronic device 100 while hovering at the corresponding location.

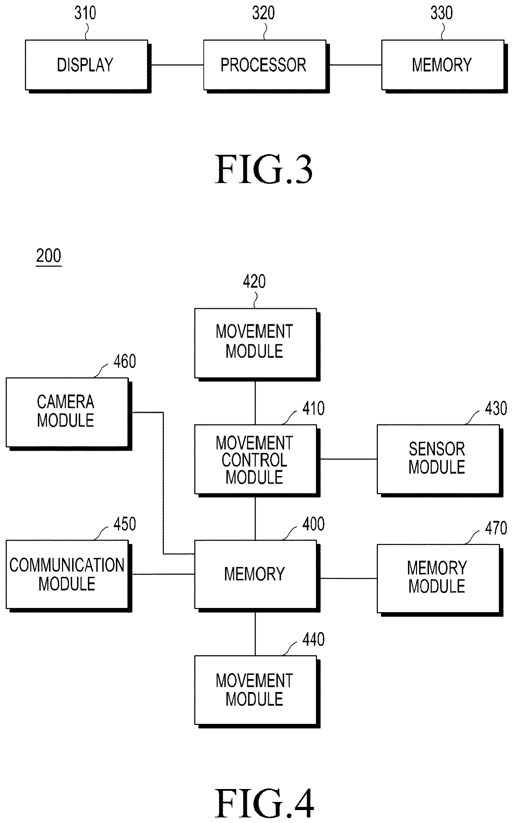

FIG. 3 schematically illustrates the configuration of the electronic device according to an embodiment of the present disclosure.

Referring to FIG. 3, the electronic device 100 may include a display 310, a processor 320, and a memory 330. The electronic device 100 may be implemented to have more or fewer elements than those illustrated in FIG. 3. For example, the electronic device 100 may include an input module (for example, a touch panel, a physical key, a proximity sensor, or a biometric sensor) or a power supply unit.

The display 310 may include, for example, a liquid crystal display (LCD), a light-emitting diode (LED) display, an organic light-emitting diode (OLED) display, a micro electro mechanical system (MEMS) display, or an electronic paper display. The display 310 may include the display 190 of FIGS. 1A to 1C. The display 310 may include a touch screen and may receive, for example, a touch, gesture, proximity, or hovering input using an electronic pen or a body part of the user.

The display 310 according to an embodiment may display the image stored in the memory 330 in a first area of a display area of the display 310 under the control of the processor 320. Further, the display 310 may display an image, which is the same as the image in the first area but smaller than the image, in a second area, which is different from the first area, under the control of the processor 320.

The processor 320 may control a plurality of hardware or software elements connected thereto and may perform various data processing and calculations by driving, for example, an operating system (OS) or an application program.

The processor 320 according to an embodiment may display the image pre-stored in the memory 330 on the display 310. However, the present disclosure is not limited thereto. For example, the processor 320 may receive an image from an external electronic device or a server through a communication unit and display the received image on the display 310.

The processor 320 may derive photography data contained in the selected image based on an external signal for selecting the image displayed on the display 310. Further, the processor 320 may generate an image, which is the same as the image displayed in the first area of the display 310 but smaller than the image, based on the external signal for selecting the image displayed on the display 310, and display the generated image in the second area of the display 310, which is different from the first area.

The processor 320 may select the photographing location information of the image contained in the derived photography data as at least one point of the moving path of the unmanned photography device. The processor 320 may transmit data related to the determined moving path to the unmanned photography device through the communication unit.

The memory 330 may store the image taken by the electronic device 100. Further, the memory 330 may store the image that the electronic device 100 receives from the external electronic device or the server.

The memory 330 according to an embodiment may store photography data that the processor 320 derives from the image and store location information of the image contained in the photography data.

An electronic device for controlling an unmanned photography device according to an embodiment may include: a display that displays an image; a memory; and a processor electrically connected to the display and the memory, wherein the processor displays a first image on the display, derives photography information contained in the first image selected based on a signal input for selecting the first image, and selects information on the location at which the first image is taken as at least one point of a moving path of the unmanned photography device.

In the electronic device for controlling the unmanned photography device according to an embodiment, the photography information may contain an aperture value, an exposure time, a sensitivity, a viewing angle, zoom magnification information, and position information of the photography device that took the first image, which are set at a time of taking the first image.

In the electronic device for controlling the unmanned photography device according to an embodiment, the processor may transmit the photography information and the location information contained in the photography information to the unmanned photography device.

In the electronic device for controlling the unmanned photography device according to an embodiment, the processor may enlarge one point of the first image based on an external signal input and display the first image including the enlarged point on the display, and change one point of a moving path of the unmanned photography device based on the enlargement magnification.

In the electronic device for controlling the unmanned photography device according to an embodiment, the processor may reduce one point of the first image based on an external signal input and display the first image including the reduced point on the display, and change one point of a moving path of the unmanned photography device based on the reduction magnification.

In the electronic device for controlling the unmanned photography device according to an embodiment, the processor may display a second image, which is identical to the first image but smaller than the second image, on the display based on an external signal input for selecting the first image.

In the electronic device for controlling the unmanned photography device according to an embodiment, when the display of the second image ends based on an external signal input, the processor may remove location information related to the first image associated with the second image from the moving path of the unmanned photography device.

In the electronic device for controlling the unmanned photography device according to an embodiment, the processor may display a map showing location information of the first image on the display based on an external signal input for selecting the first image.

In the electronic device for controlling the unmanned photography device according to an embodiment, the processor may display a user interface for selecting an option to photograph an image at the location at which the first image is taken based on an external signal input.

In the electronic device for controlling the unmanned photography device according to an embodiment, when the first image is a moving image, the processor may derive photography information contained in a frame displayed on the display based on an external signal input for selecting the first image.

FIG. 4 illustrates the configuration of the unmanned photography device according to an embodiment of the present disclosure.

Referring to FIG. 4, the unmanned photography device 200 according to an embodiment may include a processor 400, a movement control module 410, at least one movement module 420 and/or 440, a sensor module 430, a memory module 470, a communication module 450, and a camera module 460.

The processor 400 may perform calculations or data processing according to the control of at least one other element of the unmanned photography device 200 and/or the execution of an application. The processor 400 may determine a photographing location based on flight data containing a targeted point and photography setting values transmitted from the electronic device 100. When the photographing location is set, the processor 400 may automatically execute a photography application, automatically move the unmanned photography device 200 (for example, in the case of the UAV, make the UAV autonomously fly) by controlling the movement control module 410 in the photography application, automatically photograph a subject when the unmanned photography device 200 moves to a location having the set composition, and control the unmanned photography device 200 to return to the original location when the photographing ends. The processor 400 may transmit photography information containing the taken image and information on the photographing of the image to the electronic device 100.

The movement control module 410 may control the movement of the unmanned photography device 200 based on the location and position information of the unmanned photography device 200. The movement control module 410 may control the flight and the position of the unmanned photography device 200. The movement control module 410 may acquire position information and/or location information of the unmanned photography device through the GPS module of the communication module 450 and the sensor module 430.

When the unmanned photography device 200 is the UAV, the movement control module 410 may control the roll, pitch, yaw, and throttle of the unmanned photography device 200 based on the acquired location and position information. The movement control module 410 may control a hovering operation and make the unmanned photography device 200 autonomously fly to a targeted point based on the photographing location information provided to the processor 400.

The movement module 420 may move the unmanned photography device under the control of the movement control module 410. When the unmanned photography device 200 is a UAV, the movement module 420 may include motors corresponding to a plurality of propellers.

The sensor module 430 may measure a physical quantity or detect the operational state of the unmanned photography device 200 and convert the measured or detected information into an electrical signal. The sensor module 430 may include some or all of an acceleration sensor, a gyro sensor, a barometer, a terrestrial magnetism sensor (or compass sensor), an ultrasonic sensor, an optical flow for sensing a movement using an image, a temperature-humidity sensor, an illuminance sensor, an ultraviolet (UV) sensor, and a gesture sensor.

The sensor module 430 according to an embodiment may include sensors for controlling the position of the unmanned photography device 200. The sensor for calculating the position of the unmanned photography device 200 may be the gyro sensor and the acceleration sensor. In order to calculate azimuth and prevent drift of the gyro sensor, outputs of the terrestrial magnetism sensor may be combined.

The memory module 470 may include volatile and/or non-volatile memory. The memory module 470 may store a command or data associated with at least one other element of the unmanned photography device. The memory module 470 may store software and/or a program. The program may include a kernel, middleware, an application programming interface (API), and/or application programs (or applications). At least some of the kernel, the middleware, and the API may be referred to as an operating system (OS).

The memory module 470 may store flight data containing the targeted point and the photography setting values transmitted from the electronic device 100. The flight data may contain targeted image information to be automatically taken and/or camera control information.

According to an embodiment, the memory module 470 may store instructions to be executed on the processor 400. The instructions may cause the processor 400 to change the orientation of the camera module 460 based on at least some of the data (for example, photography information).

The communication module 450 may include at least one of a wireless communication module and a wired communication module. The wireless communication module may include a cellular communication module and a short-range communication module. The communication module 450 may include a GPS module.

The cellular communication module may use at least one of long-term evolution (LTE), LTE-Advanced (LTE-A), code division multiple access (CDMA), wideband CDMA (WCDMA), universal mobile telecommunications system (UMTS), Wireless Broadband (WiBro), and global system for mobile communications (GSM).

The short-range communication module may include at least one of, for example, Wi-Fi, BT, near field communication (NFC), and Global Navigation Satellite System (GNSS or global positioning system (GPS)). The GNSS may include, for example, at least one of a GPS, a Global Navigation Satellite System (GLONASS), a BeiDou Navigation Satellite System (hereinafter referred to as "BeiDou"), and a European Global Satellite-based Navigation System (Galileo), according to a use area, a bandwidth, or the like. Hereinafter, the term "GNSS", used to describe the communication module 450, may be interchangeably used with "GPS".

The wired communication module may include, for example, at least one of a universal serial bus (USB), a high-definition multimedia interface (HDMI), and recommended standard 232 (RS-232).

The GPS module according to an embodiment may output location information (longitude, latitude, altitude, GPS speed, and GPS heading) such as latitude, longitude, altitude, speed, and heading information of the UAV during the movement of the unmanned photography device 200. The location information may be generated by calculating the location based on the measurement of accurate time and distance through the GPS module. The GPS module may acquire accurate time along with three-dimensional speed information as well as latitude, longitude, and altitude.

The communication module 450 may transmit information for identifying the real-time movement state of the unmanned photography device 200. The communication module 450 according to various embodiments of the present disclosure may receive photography information transmitted from the electronic device 100. According to an embodiment, the communication module 450 may transmit the image taken by the unmanned photography device and the photography information to the electronic device 100.

The camera module 460 may photograph the subject in the photography mode. The camera module 460 may include a lens, an image sensor, an image processor (image signal processor (ISP)), and a camera controller. The image processor may be included in an application processor.

The lens may perform a focusing function using the linear and reflective characteristics of light and a function of zooming in/out on the subject.

The image sensor may have a structure of complementary metal-oxide semiconductor (CMOS) or charge-coupled device (CCD) (CMOS image sensor (CIS) or (CCD), and such type of image sensors may include a pixel array and a part for controlling (row control) and reading (readout) the pixel array. The pixel array may include a micro lens array, a color filter array, and a light detection device array. For example, color filters of the color filter array may be arranged in a Bayer pattern. The image sensor may be controlled in a global shutter manner or a rolling shutter manner. Analog pixel signals read out in the pixel array of the image sensor may be converted into digital data through an analog-to-digital converter (ADC). The converted digital data may be output to the outside (for example, the image processor) through an external interface such as a mobile industry processor interface (MIPI) through an internal digital block of the image sensor.

The image processor may include an image preprocessor and an image postprocessor. The image preprocessor may perform operations such as auto white balance (AWB), auto exposure (AE), auto focusing (AF), extraction and processing, lens shading correction, dead pixel correction, and knee correction on each subframe image. The image postprocessor may include a color interpolator, an image processing chain (IPC), and a color converter. The color interpolator may perform a color interpolation operation on the image-preprocessed-subframe images. The IPC may perform noise removal and color correction on the color-interpolated images. The color converter may convert red, blue, green (RGB) data into YUV data.

The image processor may include an encoder for encoding image-processed images and a decoder for decoding the encoded image. The encoder and the decoder may include a still image codec for encoding and decoding a still image codec and/or a moving image codec for encoding and decoding a moving image.

The image processor may scale (resize) an image-processed high-definition image to a suitable resolution (for example, the display resolution of the display) and output the scaled image on the display. Further, the image processor may use the image processing result for controlling the camera module 460 including the image sensor and/or the image processor (for example, AF, AE, AWB, IPC, face detection, and object tracking).

The camera controller may include a lens controller for controlling a lens and a direction controller for controlling the direction of the camera (up, down, left, and/or right directions). The lens controller may perform operations such as zoom, focus, and tightening by controlling the operation of the lens. The direction controller may control the angle of upward and downward directions and leftward and rightward directions of the camera such that the camera faces the direction of the subject.

The camera module 460 may be a gimbal camera. The gimbal camera may include a gimbal and a camera. The gimbal may perform a function of maintaining the unmanned photography device in an erect state regardless of shaking of the unmanned photography device. When the unmanned photography device reaches the targeted location under the control of the processor 400 in the photography mode, the camera may perform an automatic photography operation. The camera may control the angle of the camera such that the lens of the camera faces the subject based on camera control information output from the processor 400 in the photography mode.

The processor 400 may establish a wireless connection with the electronic device 100 including the display through the communication module 450. The processor 400 may receive flight data containing the targeted point and the photography setting values from the electronic device 100 through the communication module 450 and set a flight path. Further, the processor 400 may transmit the image taken through the camera module 460 to the electronic device 100 through the communication module 450.

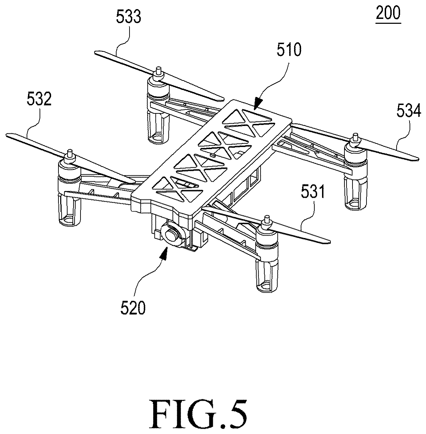

FIG. 5 is a perspective view illustrating the appearance of the unmanned photography device according to an embodiment of the present disclosure.

Referring to FIG. 5, the unmanned photography device 200 may be, for example, a quadcopter having four propellers. The unmanned photography device 200 may include a body 510, a gimbal camera 520, and propellers 531, 532, 533, and 534. The unmanned photography device 200 may have a camera mounted on the lower part of the body 510, as illustrated in FIG. 5, and take an image through the camera 520 during flight. However, the present disclosure is not limited to the above structure. For example, the camera 520 may be integrated with the body 510 on the upper part or the lateral part of the body 510.

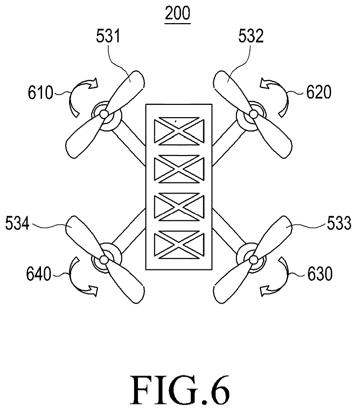

FIG. 6 illustrates the operation of the unmanned photography device 200 according to an embodiment of the present disclosure.

Referring to FIG. 6, in the unmanned photography device 200, the propellers that face each other have the same rotation direction and the propellers that neighbor each other have opposite rotation directions. In the case of a quadcopter, for example, two 531 and 533 of the four propellers 531 to 534 may rotate in a clockwise direction, as indicated by reference numerals 610 and 630, and the remaining two propellers 532 and 534 may rotate in a counterclockwise direction as indicated by reference numerals 620 and 640.

The reason why the propellers have different rotation directions is to conserve momentum. If the four propellers rotate in the same direction, the unmanned photography device 200 may continuously rotate in one direction due to the conservation of momentum. Turning, that is, altering the direction, by adjusting the rotation speed of the propellers of the unmanned photography device 200 is another example of use of conservation of momentum.

According to an embodiment, the operation of controlling the position and the flight of the unmanned photography device 200 may be performed by the movement control module (for example, the movement control module 410 of FIG. 4). The movement control module 410 may recognize the current state of the unmanned photography device 200 by analyzing information collected by the sensor module (for example, the sensor module 430 of FIG. 4).

The movement control module 410 may use some or all of the sensors of the unmanned photography device 200, such as the gyro sensor for measuring momentum, the acceleration sensor for measuring acceleration momentum of the unmanned photography device 200, the terrestrial magnetism sensor, the barometer for measuring altitude, and the GPS module for outputting three-dimensional location information of the unmanned photography device 200.

The movement control module 410 may control the rotation of the propellers 531 to 534 such that the unmanned photography device 200 balances itself during the flight based on measurement information output from the sensor module 430 and the GPS module.

The movement control module 410 may stably control the flight of the unmanned photography device 200 by analyzing the measurement result of the sensor module and the GPS module. Forward, backward, leftward, and rightward movement of the unmanned photography device 200 may be performed by increasing the rotation speed of propellers located in a direction opposite the desired direction. The same effect may be created by decreasing the rotation speed of the propellers in the direction in which it is desired to move.

When the unmanned photography device 200 is rotated, the movement control module 410 may adjust the rotation speed of two propellers that face each other, that is, two propellers rotating in the same direction. When the momentum of propellers rotating in one direction becomes dominant, the unmanned photography device 200 may lose balance and thus rotate in the opposite direction. For example, when the movement control module 410 increases the rotation speed of the propellers 531 and 533 that rotate in the clockwise direction, the unmanned photography device 200 may change its direction to the counterclockwise direction. Further, when the movement control module 410 decreases the rotation speed of all propellers, the unmanned photography device 200 may descend. When the movement control module 410 increases the rotation speed of all propellers, the unmanned photography device 200 may ascend.

The unmanned photography device 200 may change and move its direction in upward, downward, leftward, and rightward directions in multidimensional (for example, three-dimensional) space. For example, in the case of a quadcopter, the unmanned photography device 200 may ascend or descend, change its direction to the left or right, and move in forward, backward, leftward, and rightward directions by controlling the rotation of the propellers 531 to 534. The unmanned photography device 200 may control its movement (e.g., relative movement) using the four commands shown in Table 1 below.

**Table 1**

| | |
|---|---|
| Ascend or descend | Throttle |
| Change direction to left or right | Yaw |
| Move in forward or backward direction | Pitch |
| Move in leftward or rightward direction | Roll |

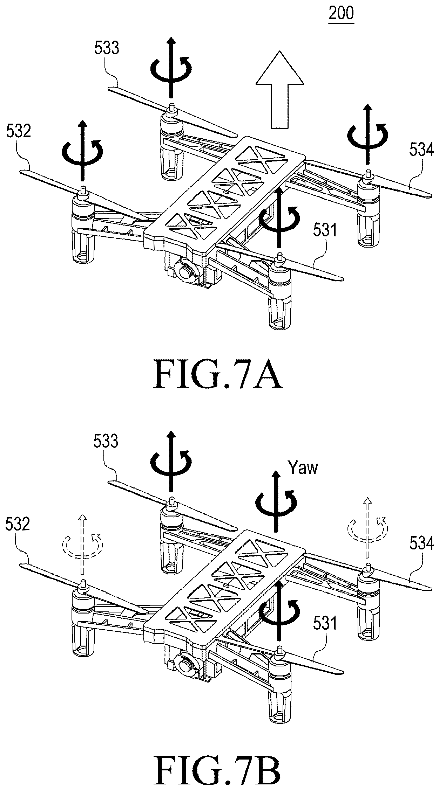

FIGS. 7A and 7B illustrate examples of controlling the movement of the unmanned photography device according to an embodiment of the present disclosure.

The quadcopter may control flight direction and movement through a combination of the rotation strengths of the four propellers 531 to 534.

Referring to FIG. 7A, the unmanned photography device 200 may ascend when the number of revolutions per minute (RPM) of the four propellers 531 to 534 increases at the same time, and may descend when the RPM decreases at the same time. In the same way, the unmanned photography device 200 may move in the forward direction by increasing the RPM of the propellers 531 and 532, move in the backward direction by increasing the RPM of the propellers 533 and 534, move in the leftward direction by increasing the RPM of the propellers 531 and 534, and move in the rightward direction by increasing the RPM of the propellers 532 and 533.

Referring to FIG. 7B, the direction of the unmanned photography device 200 may change to the leftward or rightward direction by rotating diagonally positioned propellers 531 and 533 or 532 and 534 more powerfully than the other diagonally positioned propellers.

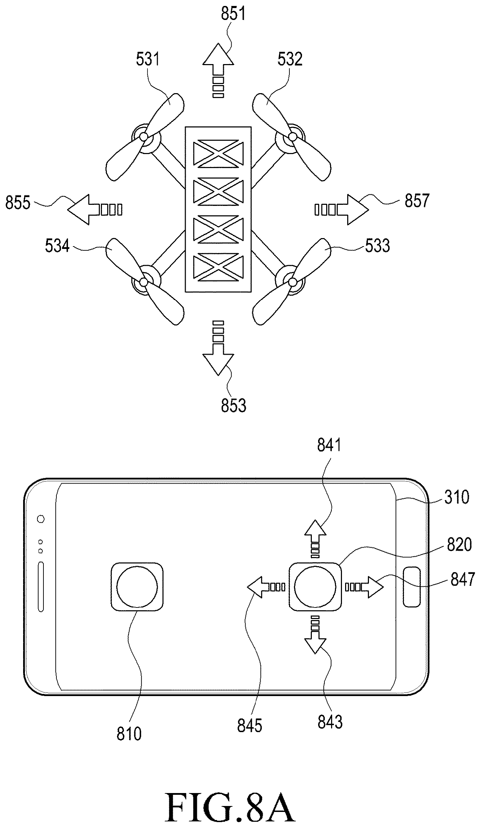

FIGS. 8A to 8C illustrate the operation of controlling the movement of the unmanned photography device through the electronic device according to an embodiment of the present disclosure.

Referring to FIGS. 8A to 8C, the unmanned photography device 200 may include the movement control module 410 and the movement module 420, for controlling the flight position and the flight, and the processor 400 for controlling an application of the unmanned photography device 200. The movement control module 410 may be connected to various types of hardware and sensors installed in the unmanned photography device 200 through a hub of the platform of the unmanned photography device 200 so as to autonomously fly.

The processor 400 may include an operating system (OS) as an application core and provide an application that executes hardware and software through the provision of an API. The movement control module 410 may acquire information through the processor 400 in order to move the unmanned photography device 200 to a preset location and control the unmanned photography device 200 to move to the corresponding destination based on the acquired information.

Further, the unmanned photography device 200 may be remotely controlled by the electronic device 100.

Referring to FIGS. 8A to 8C, the electronic device 100 may display a first jog button 810 and a second jog button 820 for controlling the movement of the unmanned photography device 200 on the display 310.

The first jog button 810 and the second jog button 820 may be activated by a user's touch, and the electronic device 100 may transmit a command for controlling the movement of the unmanned photography device 200 according to a touch and drag direction to the unmanned photography device 200. The processor 400 of the unmanned photography device 200 may transmit the command transmitted from the electronic device 100 to the movement control module 410, and the movement control module 410 may control the movement of the unmanned photography device 200 by controlling the movement module 420. The first jog button 810 of the electronic device 100 may generate throttle and yaw commands, and the second jog button 810 may generate pitch and roll commands.

FIG. 8A illustrates the operation of controlling the pitch and roll movement of the unmanned photography device 200.

The term "pitch" may refer to the front and back movement of the unmanned photography device 200, and the term "roll" may refer to the left and right movement of the unmanned photography device 200. For example, when the user drags the second jog button 820 in a direction 841, the electronic device 100 may analyze a drag direction and a drag distance and transmit information related to the forward movement and the movement speed to the unmanned photography device 200. Then, the movement control module 410 of the unmanned photography device 200 may perform control such that the propellers 531 and 532 rotate at a number of revolutions per minute (RPM) greater than that of the propellers 533 and 534. The unmanned photography device 200 may move forwards in a direction 851.

When the user touches and drags the second jog button 820 in a direction 843, the unmanned photography device 200 may move backwards in a direction 853 by rotating the propellers 533 and 534 more powerfully than the propellers 531 and 532.

In the same way, when the user touches and drags the second jog button 820 in a direction 845, the unmanned photography device 200 may move leftwards in a direction 855 by rotating the propellers 531 and 534 more powerfully than the propellers 532 and 533.

When the user touches and drags the second jog button 820 in a direction 847, the unmanned photography device 200 may move rightwards in a direction 857 by rotating the propellers 532 and 533 more powerfully than the propellers 531 and 534.

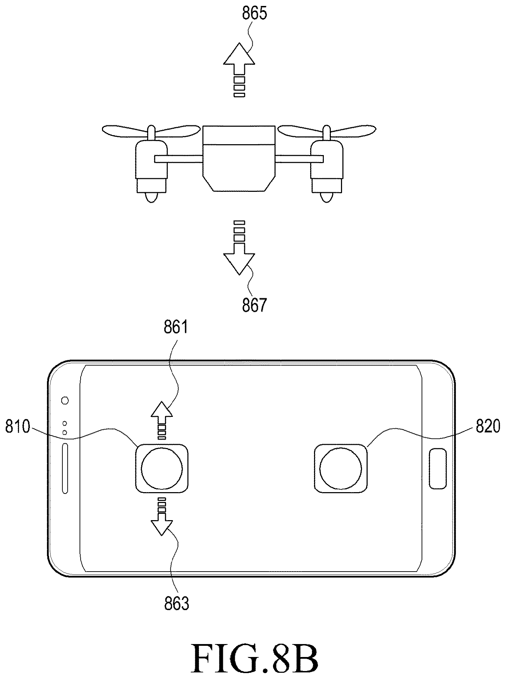

FIG. 8B illustrates the operation of controlling the ascent/descent of the unmanned photography device 200.

For example, when the user drags the first jog button 810 in a direction 861, the electronic device 100 may analyze a drag direction and a drag distance and transmit information related to an ascending movement and a movement speed to the unmanned photography device 200. Then, the RPM of the propellers 531 to 534 increases at the same time based on the speed information of the unmanned photography device 200 and thus the unmanned photography device 200 may move upwards in a direction 865.

When the user touches and drags the first jog button 810 in a direction 863, the unmanned photography device 200 may move downwards in a direction 867 by decreasing the RPM of the propellers 531 to 534.

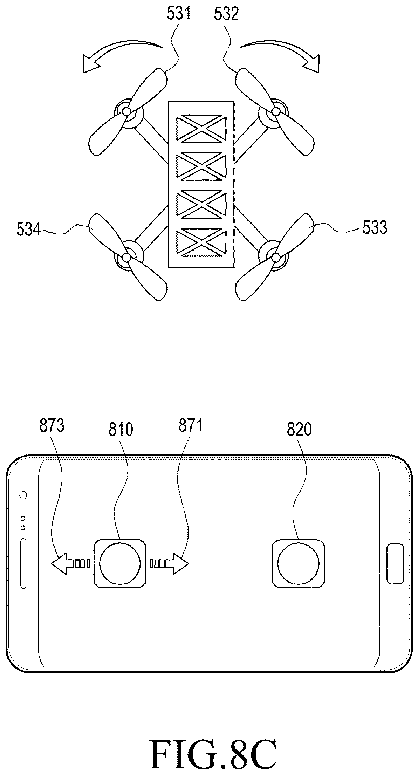

FIG. 8C illustrates the operation of controlling the yaw movement.

The term "yaw" may refer to a change in the direction of the unmanned photography device 200. The unmanned photography device 200 may differently control the rotation directions of the propellers 531 and 533 and the propellers 532 and 534, as illustrated in FIG. 8C. For example, when the user drags the first jog button 810 in a direction 871, the unmanned photography device 200 may increase the RPM of the propellers 531 and 533 rotating in a clockwise direction such that the propellers 531 and 533 are more powerfully rotated than the propellers 532 and 534 rotating in a counterclockwise direction, so as to change the direction of the unmanned photography device 200 to the rightward direction. When the user drags the first jog button 810 in a direction 873, the unmanned photography device 200 may increase the RPM of the propellers 532 and 534 rotating in a clockwise direction such that the propellers 532 and 534 are more powerfully rotated than the propellers 531 and 533 rotating in a counterclockwise direction, so as to change the direction of the unmanned photography device 200 to the leftward direction.

The flight operation of the unmanned photography device 200 may be controlled by the adjustment of the first jog button 810 or the second jog button 820 of the electronic device 100. According to an embodiment, the unmanned photography device 200 may fly autonomously. Further, the unmanned photography device 200 may perform an autonomous photography operation.

In the autonomous photography operation, the unmanned photography device 200 may autonomously fly based on flight data containing the targeted point and the photography setting values transmitted from the electronic device 100 as described above. In order to move to the photographing location, the unmanned photography device 200 may autonomously fly up to the photographing location corresponding to the targeted point by controlling the throttle, pitch, roll, and/or yaw operations, as described in connection with FIGS. 8A to 8C.

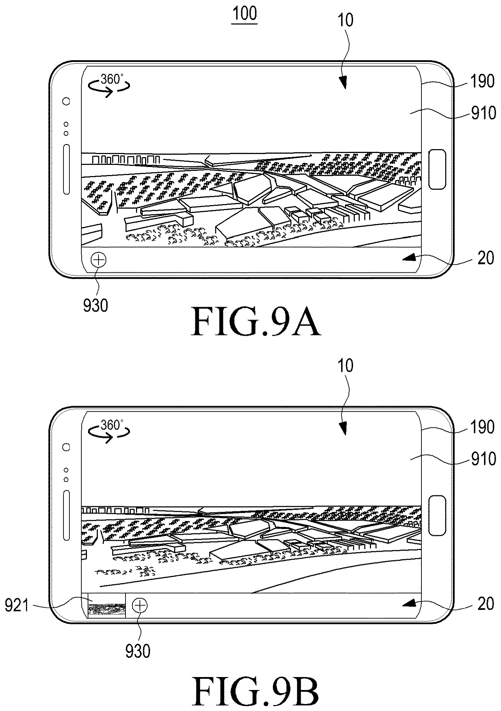

FIGS. 9A and 9B illustrate a process of displaying a 360-degree image in the electronic device and setting a moving path of the unmanned photography device by selecting the displayed image according to an embodiment of the present disclosure.

Referring to FIGS. 9A and 9B, the electronic device 100 may display a first image 910 on the display 190. According to an embodiment, the first image 910 may be an image having a viewing angle of 360 degrees. The electronic device 100 may read image data pre-stored in the memory and display the first image 910 on the display 190.

According to an embodiment, the electronic device 100 may display the first image 910 in the first area 10 of the display 190. The electronic device 100 may display a selection icon 930 in the second area 20 of the display 190. The user may select the first image 910 displayed in the first area 10 through the selection icon 930. In the state in which the first image 910 is displayed in the first area 10, the electronic device 100 may generate a second (a) image 921, which is smaller than the first image 910, based on an external signal input of touching the selection icon 930 and display the generated second (a) image 921 in the second area 20.

Referring to FIGS. 9A and 9B, the electronic device 100 may display a second (a) image 921 in the second area 20. In this state, the electronic device 100 may display the first image 910, the reproduction area of which is changed, in the first area 10 based on an external signal input. For example, the electronic device 100 may change and display the reproduction area of the first image 910 based on an external signal input of touching and dragging the first image 910 in a leftward, rightward, upward, or downward direction. However, the method by which the electronic device 100 changes and displays the reproduction area of the first image 910 is not limited thereto. For example, in the state in which the first image 910 is displayed in the first area 10, the electronic device 100 may change and display the reproduction area of the first image 910 in the first area 10 based on a separate physical key button input.

According to an embodiment, the electronic device 100 may display the selection icon 930 near the second (a) image 921. The user may select the first image 910, the reproduction area displayed in the first area 10 of which is changed, through the selection icon 930. In the state in which the first image 910, the reproduction area of which is changed, is displayed in the first area 10, the electronic device 100 may generate a second (b) image (not shown), which is smaller than the first image 910 having the changed reproduction area, based on an external signal input of touching the selection icon 930 and display the generated second (b) image in the second area 20.

According to an embodiment, the electronic device 100 may derive photography information related to the second (a) image 921 displayed in the second area 20. Since the photography information has been described in detail in FIGS. 1A to 1C, a description thereof will be omitted.

When the first image 910 is a 360-degree image, the second (a) image 921 and the second (b) image may be images taken at the same location in different photographing directions. Accordingly, when the unmanned photography device 200 receives flight data containing the targeted point and the photography setting values based on the second (a) image 921 and the second (b) image from the electronic device 100, the unmanned photography device 200 may photograph images while rotating in one position.

After the autonomous photographing, the unmanned photography device 200 may transmit the taken image to the electronic device 100. Further, after the photographing ends, the unmanned photography device 200 may return to the location at which autonomous flight started.

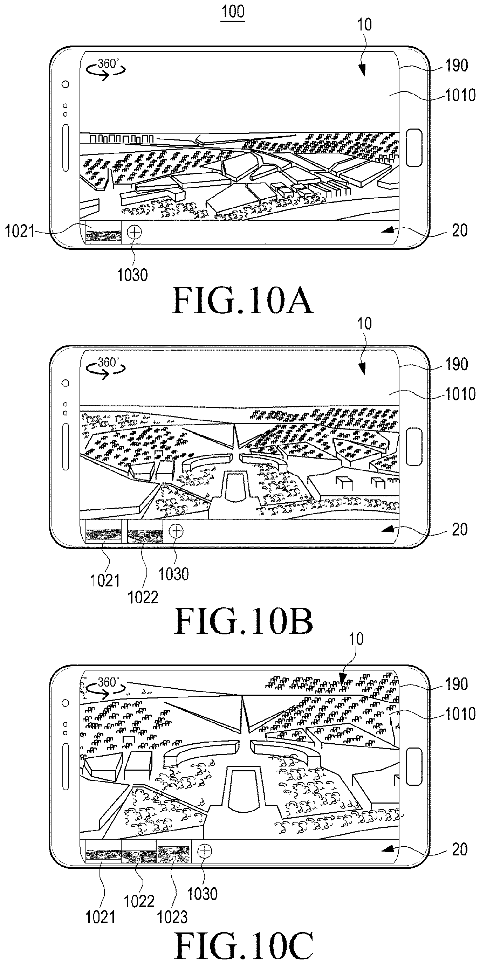

FIGS. 10A to 10C illustrate a process of displaying a 360-degree image in the electronic device and setting a moving path of the unmanned photography device by enlarging and then selecting the displayed image according to an embodiment of the present disclosure.

Referring to FIGS. 10A to 10C, the electronic device 100 may display a first image 1010 on the display 190. According to an embodiment, the first image may be an image having a viewing angle of 360 degrees.

According to an embodiment, the electronic device 100 may display the first image 1010 in the first area 10 of the display 190. The electronic device 100 may display a selection icon 1030 in the second area 20 of the display 190. The user may select the first image 1010 displayed in the first area 10 through the selection icon 1030. In the state in which the first image 1010 is displayed in the first area 10, the electronic device 100 may generate a second (a) image 1021, which is smaller than the first image 1010, based on an external signal input of touching the selection icon 1030 and display the generated second (a) image 1021 in the second area 20.

Referring to FIGS. 10A to 10C, the electronic device 100 may display the second (a) image 1021 in the second area 20. In this state, the electronic device 100 may display the first image 1010 having a changed reproduction area in the first area 10 based on an external signal input. For example, the electronic device 100 may change and display the reproduction area of the first image 1010 based on an external signal input of touching and dragging the first image 910 in a leftward, rightward, upward, or downward direction.

According to an embodiment, in the state in which the first image 1010 having the changed reproduction area is displayed in the first area 10, the electronic device 100 may generate a second (b) image 1022, which is smaller than the first image 1010 having the changed reproduction area, based on an external signal input of touching the selection icon 1030, and display the generated second (b) image 1022 in the second area 20.

Referring to FIGS. 10A to 10C, the electronic device 100 may display the second (a) image 1021 and the second (b) image 1022 in the second area 20. In this state, the electronic device 100 may display the enlarged first image 1010 in the first area 10 based on an external signal input. For example, the electronic device 100 may enlarge and display one point of the first image 1010 based on the external signal input of touching and dragging the one point of the first image 1010 in opposite directions.

In the state in which the first image 1010 having the enlarged one point is displayed in the first area 10, the electronic device 100 may generate a second (c) image 1023, which is smaller than the first image 1010 having the enlarged one point, based on an external signal input of touching the selection icon 1030 and display the generated second (c) image 1023 in the second area 20.

When the second (c) image 1023 is an image enlarged from one point of the first image 1010, the electronic device 100 may determine the flight-targeted point of the unmanned photography device 200 based on the enlargement magnification. For example, when the length of the touch and drag is short, the electronic device 100 may set a short distance toward the enlarged one point from the point at which the first image 1010 is taken as the targeted point. When the length of the touch and drag is long, the electronic device 100 may set a long distance toward the enlarged one point from the point at which the first image 1010 is taken as the targeted point. The movement distance of the unmanned photography device 200 based on the length of the touch and drag may be derived from a preset table or equation.

According to an embodiment, in the case of an image enlarged from one position of the image, the electronic device 100 may determine a zoom magnification of the camera 520 installed in the unmanned photography device 200 based on the enlargement magnification. For example, when the length of the touch and drag is short, the electronic device 100 may set the zoom magnification of the camera 520 to be low. When the length of the touch and drag is long, the electronic device 100 may set the zoom magnification of the camera 520 to be high. The zoom magnification of the camera 520 based on the length of the touch and drag may be derived from a preset table or equation.

According to various embodiments, when the second (c) image 1023 is an image reduced from one point of the first image 1010, the electronic device 100 may determine the flight-targeted point of the unmanned photography device 200 based on the reduction magnification. For example, when the length of the touch and drag is short, the electronic device 100 may set a short distance toward the direction opposite the reduced one point from the point at which the first image 1010 is taken as the targeted point. When the length of the touch and drag is long, the electronic device 100 may set a long distance toward a direction opposite the reduced one point from the point at which the first image is taken. The movement distance of the unmanned photography device 200 based on the length of the touch and drag may be derived from a preset table or equation.

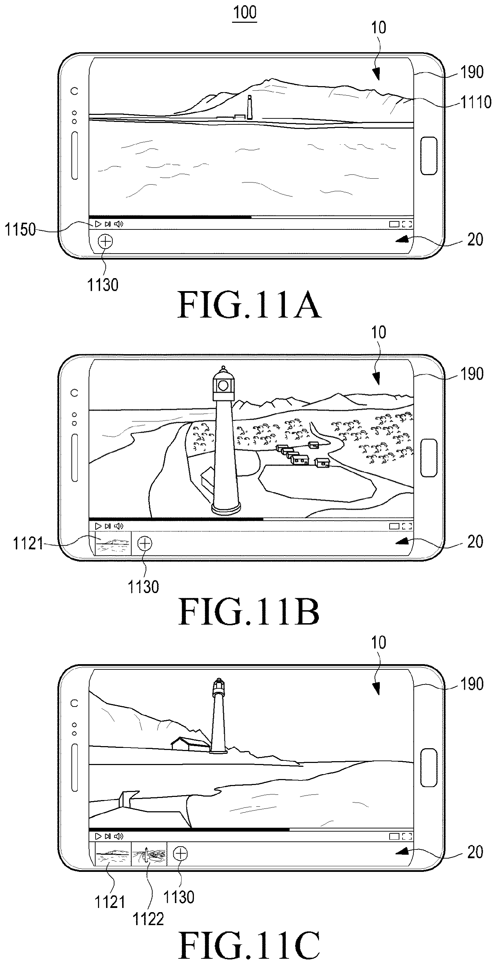

FIGS. 11A to 11C illustrate a process of displaying a moving image in the electronic device and setting a moving path of the unmanned photography device by selecting the displayed moving image according to an embodiment of the present disclosure.

Referring to FIGS. 11A to 11C, the electronic device 100 may reproduce a moving image 1110 on the display 190.

According to an embodiment, the electronic device 100 may reproduce the moving image 1110 in the first area 10 of the display 190. The electronic device 100 may display a user interface 1150 showing the playback of the moving image, the stop of playback, and a progress state. The electronic device 100 may display a selection icon 1130 in the second area 20 of the display 190. The user may select a desired frame in the moving image 1110 displayed in the first area 10 through the selection icon 1130.

Referring to FIGS. 11A to 11C, in the state in which the moving image 1110 is reproduced in the first area 10, the electronic device 100 may generate a second (a) image 1121, which is the same as the frame currently displayed in the first area 10 but smaller than the frame, based on an external signal input of touching the selection icon 1130, and display the generated second (a) image 1121 in the second area 20.

The electronic device 100 may display the second (a) image 1121 in the second area 20. In this state, the electronic device 100 may continuously reproduce the moving image 1110 in the first area 10.

According to an embodiment, the electronic device 100 may display the selection icon 1130 near the second (a) image 1121. The user may select the current frame of the moving image 1110 displayed in the first area 10 through the selection icon 1130.

Referring to FIGS. 11A to 11C, in the state in which the moving image 1110 is reproduced in the first area 10, the electronic device 100 may generate a second (b) image 1122, which is the same as the frame currently displayed in the first area 10 but smaller than the frame, based on an external signal input of touching the selection icon 1130, and display the generated second (b) image 1122 in the second area 20.

The electronic device 100 may display the second (a) image 1121 and the second (b) image 1122 in the second area 20. In this state, the electronic device 100 may continuously reproduce the moving image 1110 in the first area 10 based on an external signal input.

According to an embodiment, the electronic device 100 may display the selection icon 1130 near the second (a) image 1121 and the second (b) image 1122. The user may select a desired frame in the moving image 1110 reproduced in the first area 10 through the selection icon 1130. In the state in which the moving image 1110 is reproduced in the first area 10, the electronic device 100 may generate an image (not shown), which is the same as the frame currently displayed in the first area 10 but smaller than frame, based on an external signal input of touching the selection icon 1130, and display the generated image in the second area 20.

As described above, according to an embodiment of the present disclosure, the user may select a desired frame while reproducing the moving image in the electronic device 100. The electronic device 100 may generate flight data containing the targeted point and the photography setting values based on the selected frames, and transmit the generated flight data to the unmanned photography device 200.

According to various embodiments, the moving image 1110 may store photography information in every frame, and the electronic device 100 may generate flight data containing the targeted point and the photography setting values based on the photography information stored in the selected frames through the above-described method.

However, the present disclosure is not limited thereto. For example, when the electronic device taking the moving image is an unmanned photography device, photography information may be stored as metadata at a predetermined time interval (for example, once per second) if the unmanned photography device flies under the control of the user. According to another embodiment, the electronic device taking the moving image may store photography information of the first frame after the beginning of photographing as photography information of the entire moving image file. Further, the electronic device taking the moving image may store photography information as metadata based on the generation of a user's control signal.

In addition, when the unmanned photography device hovers at a predetermined location, the photography information may be recorded based on the input of the user's control signal without recording overlapping information in the photography information generated when the user's control signal is not received.

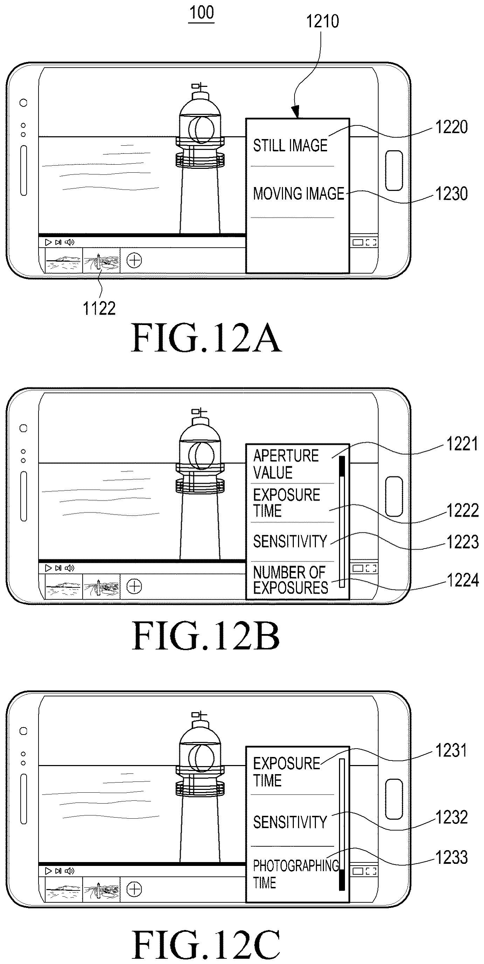

FIGS. 12A to 12C illustrate a process of selecting a photography option while setting a moving path of the unmanned photography device by the electronic device according to an embodiment of the present disclosure.

FIG. 12A may illustrate the same situation as that of FIG. 11C.

Referring to FIGS. 12A to 12C, the electronic device 100 may display a user interface 1210 for setting a photography option at the point at which the same image as the second (b) image 1122 is taken based on a signal of successively touching the second (b) image 1122. That is, the user may change a photography setting value of the camera module 460 included in the unmanned photography device 200 through the option set by the user before the second (b) image is taken. However, the method of displaying the user interface 1210 for setting the photography option by the electronic device 100 is not limited thereto.

Referring to FIGS. 12A to 12C, the electronic device 100 may display the user interface 1210 for setting the photography option. The user interface 1210 may set, for example, options for taking a still image 1220 and a moving image 1230.

The electronic device 100 may display the option related to the taking of the still image based on a user input signal for selecting the taking of the still image 1220. The option related to the taking of the still image may include, for example, controlling an aperture value control 1221, an exposure time 1222, a sensitivity 1223, and the number of exposures 1224, and setting sequence shooting (not shown).

Referring to FIGS. 12A to 12C, the electronic device 100 may display options related to the taking of the moving image based on a user input signal for selecting the taking of the moving image 1230. The options related to the taking of the moving image may include, for example, controlling an aperture value (not shown), an exposure time 1231, and a sensitivity 1232, and setting a moving image photographing time 1233.

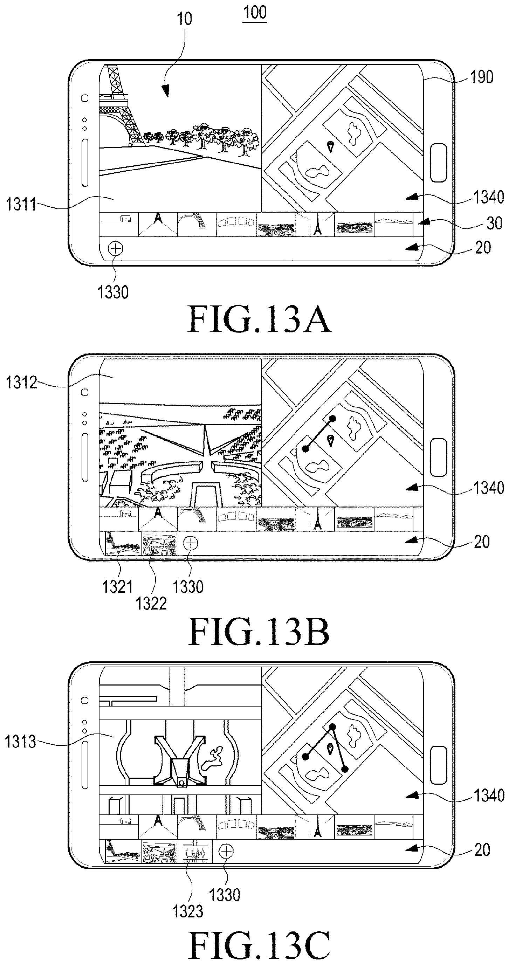

FIGS. 13A to 13C illustrate a process of displaying an image selected from a plurality of images and a location at which the selected image is taken and setting the location at which the image is taken as a moving path of the unmanned photography device by the electronic device according to an embodiment of the present disclosure.

Referring to FIGS. 13A to 13C, the electronic device 100 may display a plurality of images in a third area 30 of the display 190. The electronic device 100 may display the plurality of images in the third area 30 using image files pre-stored in the memory 330 or receiving the plurality of images from an external electronic device. The electronic device 100 may display the plurality of images in the third area 30 through, for example, thumbnail images.

The electronic device 100 may display an image selected based on user input of selecting one of the images displayed in the third image 30 as a first (a) image 1311 in the first area 10. The electronic device 100 may display the image in the first area 10 based on, for example, the original image of the selected image.

The electronic device 100 may display a selection icon 1330 in the second area 20 of the display 190. A user may select the first (a) image 1311 displayed in the first area 10 through the selection icon 1330.

According to an embodiment, when the first (a) image 1311 is selected, the electronic device 100 may display the location at which the first (a) image 1311 was taken on a map 1340.

Referring to FIGS. 13A to 13C, the electronic device 100 may generate a second (a) image 1321, which is the same as the first (a) image 1311 displayed in the first area 10 but smaller than the first (a) image 1311, based on an external signal input of touching the selection icon 1330, and display the generated second (a) image 1321 in the second area 20. However, the method of generating the second (a) image 1321 is not limited thereto.

The electronic device 100 may display the second (a) image 1321 in the second area 20. In this state, the electronic device 100 may display the first (b) image 1312 in the first area 10 through the method described in FIG. 13A. The user may select the first (b) image 1312 displayed in the first area 10 through the selection icon 1330. The electronic device 100 may generate a second (b) image 1322, which is the same as the selected first (b) image 1312 but smaller than the first (b) image 1312, and display the generated second (b) image 1322 in the second area 20.

According to an embodiment, when the first (b) image 1312 is selected, the electronic device 100 may display the location at which the first (b) image 1312 was taken on the map 1340.

Referring to FIGS. 13A to 13C, the first (c) image 1313 may be displayed in the first area 10 through the method described in FIG. 13A. The electronic device 100 may generate a second (c) image 1323, which is the same as the first (c) image 1313 currently displayed in the first area 10 but smaller than the first (c) image 1313, based on an external signal input of touching the selection icon 1330, and display the generated second (c) image 1323 in the second area 20.

According to an embodiment, when the first (c) image 1313 is selected, the electronic device 100 may display the location at which the first (c) image 1313 was taken on the map 1340.

The electronic device 100 may generate flight data containing the targeted point and the photography setting values based on the selected images and transmit the generated flight data to the unmanned photography device 200.

As described above, according to an embodiment of the present disclosure, the user may select a desired image from a plurality of images and insert the corresponding image into the flight path of the unmanned photography device 200. Further, through the display of locations at which the selected images are taken on the map 1340, the user may predict the moving path of the unmanned photography device on the map 1340 before the unmanned photography device flies.

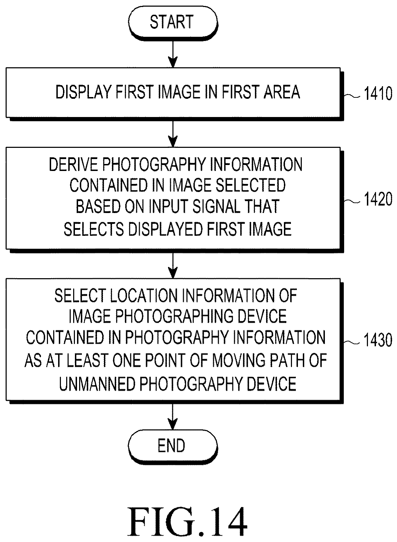

FIG. 14 is a flowchart illustrating the flight path of the unmanned photography device by the electronic device according to an embodiment of the present disclosure.

Referring to FIG. 14, in operation 1410, the electronic device 100 may display a first image in a first area of a display area of the display. The first image may be an image stored in the electronic device 100 or an image received from an external electronic device.

In operation 1420, the electronic device 100 may derive photography information contained in the selected first image based on an input signal of selecting the first image displayed in the first area.

The photography information may include photography setting values, for example, an aperture value, an exposure time, and sensitivity. Further, the photography information may include, for example, latitude, longitude, and altitude information used by a GPS at the time point at which the photography device that took the first image took the first image. In addition, the photography information may include, for example, a latitude, a position of the photography device, which may be acquired based on a geomagnetic sensor or a gyro sensor at the time point at which the photography device that took the first image took the first image, the orientation of the camera included in the photography device, and the inclination of the photography device.

When the photography device that took the first image is a UAV, the photography information may contain, for example, location information (for example, roll, pitch, and yaw information) of the UAV at the time point at which the first image was taken.

In operation 1430, the electronic device 100 may select the location information of the image photography device contained in the photography information as at least one point of the moving path of the unmanned photography device and insert the selected point into the moving path.

A method of controlling an electronic device controlling an unmanned photography device according to an embodiment may include: an operation of displaying a first image; an operation of deriving photography information contained in the first image selected based on an external signal input for selecting the first image; and an operation of selecting information on the location, at which the first image was taken, contained in the derived photography information as at least one point of a moving path of the unmanned photography device.

In the method of controlling the electronic device controlling an unmanned photography device according to an embodiment, the photography information may contain an aperture value, an exposure time, a sensitivity, a viewing angle, zoom magnification information, and position information of the photography device that took the first image, which are set when the first image was taken.

The method of controlling the electronic device controlling an unmanned photography device according to an embodiment may further include an operation of transmitting the photography information and the location information contained in the photography information to the unmanned photography device.

In the method of controlling the electronic device controlling an unmanned photography device according to an embodiment, the operation of displaying the first image may include an operation of enlarging and displaying one point of the first image based on an external signal input and changing one point of a moving path of the unmanned photography device based on the enlargement magnification.

In the method of controlling the electronic device controlling an unmanned photography device according to an embodiment, the operation of displaying the first image may include an operation of reducing and displaying one point of the first image based on an external signal input and changing one point of a moving path of the unmanned photography device based on the reduction magnification.

In the method of controlling the electronic device controlling an unmanned photography device according to an embodiment, the operation of deriving the photography information contained in the first image selected based on the external signal input for selecting the first image may include an operation of displaying a second image, which is identical to the first image but smaller than the second image, on the display.

The method of controlling the electronic device controlling an unmanned photography device according to an embodiment may further include an operation of, when the display of the second image ends based on an external signal input, removing location information related to the first image associated with the second image from the moving path of the unmanned photography device.

In the method of controlling the electronic device controlling an unmanned photography device according to an embodiment, the operation of displaying the first image may include an operation of displaying a map showing location information of the first image on the display.

The method of controlling the electronic device controlling an unmanned photography device according to an embodiment may further include an operation of displaying a user interface for selecting an option to take an image at the location at which the first image was taken based on an external signal input.

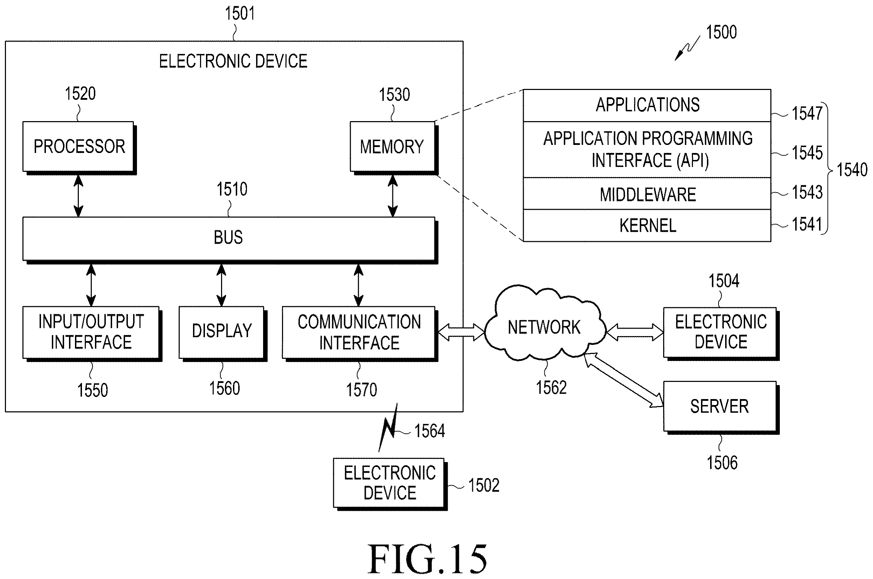

FIG. 15 illustrates an electronic device within a network environment according to an embodiment of the present disclosure.

Referring to FIG. 15, an electronic device 1501 within a network environment 1500, according to various embodiments, will be described with reference to FIG. 15. The electronic device 1501 may include the electronic device 100 of FIGS. 1A to 1C. The electronic device 1501 may include a bus 1510, a processor 1520, a memory 1530, an input/output interface 1550, a display 1560, and a communication circuit 1570. In some embodiments, the electronic device 1501 may omit at least one of the elements, or may further include other elements. The bus 1510 may interconnect the elements 1510 to 1570 and include, for example, a circuit that transmits communication (for example, control messages or data) between the elements. The processor 1520 may include one or more of a central processing unit, an application processor, and a communication processor (CP). The processor 1520, for example, may carry out operations or data processing relating to the control and/or communication of at least one other element of the electronic device 1501.

The memory 1530 may include volatile and/or non-volatile memory. The memory 1530 may store, for example, instructions or data relevant to at least one other element of the electronic device 1501. According to an embodiment, the memory 1530 may store software and/or a program 1540. The program 1540 may include, for example, a kernel 1541, middleware 1543, an application programming interface (API) 1545, and/or application programs (or "applications") 1547. At least some of the kernel 1541, the middleware 1543, and the API 1545 may be referred to as an operating system (OS). The kernel 1541 may control or manage system resources (for example, the bus 1510, the processor 1520, or the memory 1530) used for executing an operation or function implemented by other programs (for example, the middleware 1543, the API 1545, or the application 1547). Furthermore, the kernel 1541 may provide an interface through which the middleware 1543, the API 1545, or the application programs 1547 may access the individual elements of the electronic device 1501 to control or manage system resources.

The middleware 1543 may function as, for example, an intermediary for allowing the API 1545 or the application programs 1547 to communicate with the kernel 1541 to exchange data. Furthermore, the middleware 1543 may process one or more task requests, which are received from the application programs 1547, according to priorities thereof. For example, the middleware 1543 may assign priorities for using system resources (for example, the bus 1510, the processor 1520, the memory 1530, or the like) of the electronic device 1501 to one or more of the application programs 1547, and may process the one or more task requests. The API 1545 is an interface used by the application 1547 to control a function provided from the kernel 1541 or the middleware 1543, and may include, for example, at least one interface or function (for example, an instruction) for file control, window control, image processing, character control, or the like. For example, the input/output interface 1550 may forward instructions or data, input from a user or an external device, to the other element(s) of the electronic device 1501, or may output instructions or data, received from the other element(s) of the electronic device 1501, to the user or the external device.

The display 1560 may include, for example, a liquid crystal display (LCD), a light-emitting diode (LED) display, an organic light-emitting diode (OLED) display, a micro electro mechanical system (MEMS) display, or an electronic paper display. The display 1560 may display, for example, various types of content (for example, text, images, video, icons, and/or symbols) for a user. The display 1560 may include a touch screen and may receive, for example, a touch, gesture, proximity, or hovering input using an electronic pen or a body part of the user. The communication interface 1570 may configure communication, for example, between the electronic device 1501 and an external device (for example, a first external electronic device 1502, a second external electronic device 1504, or a server 1506). For example, the communication interface 1570 may be connected to a network 1562 through wireless or wired communication to communicate with the external device (for example, the second external electronic device 1504 or the server 1506) and/or to the first external electronic device 1502 via short-range communication 1564.

The wireless communication may include, for example, cellular communication that uses at least one of LTE, LTE-Advanced (LTE-A), code division multiple access (CDMA), wideband CDMA (WCDMA), universal mobile telecommunications system (UMTS), wireless broadband (WiBro), global system for mobile communications (GSM), or the like. According to an embodiment, the wireless communication may include, for example, at least one of Wi-Fi, Bluetooth, Bluetooth low energy (BLE), ZigBee, Near Field Communication (NFC), magnetic secure transmission, Radio Frequency (RF), and body area network (BAN). According to an embodiment, the wireless communication may include a GNSS. The GNSS may be, for example, a global positioning system (GPS), a global navigation satellite system (GLONASS), a BeiDou navigation satellite system (hereinafter, referred to as "BeiDou"), or Galileo (the European global satellite-based navigation system). Hereinafter, in this document, the term "GPS" may be interchangeable with the term "GNSS". The wired communication may include, for example, at least one of a universal serial bus (USB), a high-definition multimedia interface (HDMI), Recommended Standard 232 (RS-232), a plain old telephone service (POTS), and the like. The network 1562 may include a telecommunications network, for example, at least one of a computer network (for example, a local area network (LAN) or a wide area network (WAN)), the Internet, and a telephone network.

Each of the first and second external electronic devices 1502 and 1504 may be a type that is the same or different from that of the electronic device 1501. According to various embodiments of the present disclosure, all or some of the operations performed by the electronic device 1501 may be performed by another electronic device or multiple electronic devices (for example, the first and second external electronic devices 1502 and 1504 or the server 1506). According to an embodiment, when the electronic device 1501 has to perform some functions or services automatically or in response to a request, the electronic device 1501 may make a request for performing at least some functions relating thereto to another device (for example, the electronic device 1502 or 1504 or the server 1506) instead of or additionally performing the functions or services by itself. Another electronic device (for example, the electronic device 1502 or 1504 or the server 1506) may execute the requested functions or the additional functions, and may deliver the result of execution thereof to the electronic device 1501. The electronic device 1501 may provide the received result as it is, or may additionally process the received result to provide the requested functions or services. To this end, for example, cloud computing, distributed computing, or client-server computing technology may be used.

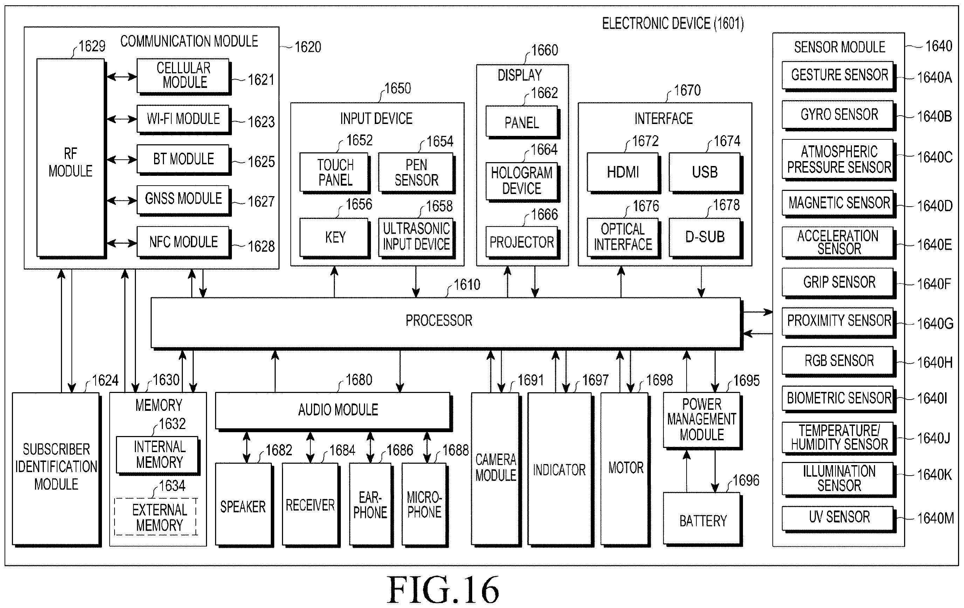

FIG. 16 is a block diagram of an electronic device 1601 according to an embodiment of the present disclosure.

Referring to FIG. 16, the electronic device 1601 may include, for example, all or some of the elements of the electronic device 1501 of FIG. 15 or the electronic device 100 of FIGS. 1A to 1C. The electronic device 1601 may include at least one processor 1610 (e.g., an Application Processor (AP)), a communication module 1620, a subscriber identification module 1624, a memory 1630, a sensor module 1640, an input device 1650, a display 1660, an interface 1670, an audio module 1680, a camera module 1691, a power management module 1695, a battery 1696, an indicator 1697, and a motor 1698. The processor 1610 may control a plurality of hardware or software elements connected thereto and may perform various data processing and operations by driving an operating system (OS) or an application program. The processor 1610 may be implemented by, for example, a system on chip (SoC). According to an embodiment, the processor 1610 may further include a graphic processing unit (GPU) and/or an image signal processor (ISP). The processor 1610 may also include at least some of the elements illustrated in FIG. 16 (for example, a cellular module 1621). The processor 1610 may load, in volatile memory, instructions or data received from at least one of the other elements (for example, non-volatile memory), process the loaded instructions or data, and store the resultant data in non-volatile memory.

The communication module 1620 may have a configuration that is the same as, or similar to, that of the communication interface 1570. The communication module 1620 may include, for example, a cellular module 1621, a Wi-Fi module 1623, a Bluetooth (BT) module 1625, a GNSS module 1627, an NFC module 1628, and an RF module 1629. The cellular module 1621 may provide, for example, a voice call, a video call, a text message service, an Internet service, or the like through a communication network. According to an embodiment, the cellular module 1621 may identify and authenticate the electronic device 1601 within a communication network using the subscriber identification module 1624 (for example, a subscriber identity module (SIM) card). According to an embodiment, the cellular module 1621 may perform at least some of the functions that the processor 1610 may provide. According to an embodiment, the cellular module 1621 may include a communication processor (CP). According to some embodiments, at least some (for example, two or more) of the cellular module 1621, the Wi-Fi module 1623, the BT module 1625, the GNSS module 1627, and the NFC module 1628 may be included in one integrated chip (IC) or IC package. The RF module 1629 may transmit/receive, for example, a communication signal (for example, an RF signal). The RF module 1629 may include, for example, a transceiver, a power amp module (PAM), a frequency filter, a low-noise amplifier (LNA), an antenna, or the like. According to another embodiment, at least one of the cellular module 1621, the Wi-Fi module 1623, the BT module 1625, the GPS module 1627, and the NFC module 1628 may transmit/receive an RF signal through a separate RF module. The subscriber identification module 1624 may include, for example, a card that includes a subscriber identification module or an embedded SIM, and may contain unique identification information (for example, an integrated circuit card identifier (ICCID)) or subscriber information (for example, international mobile subscriber identity (IMSI)).

The memory 1630 (for example, the memory 1530) may include, for example, an internal memory 1632 or an external memory 1634. The internal memory 1632 may include, for example, at least one of volatile memory (for example, a dynamic random-access memory (DRAM), a static RAM (SRAM), a synchronous DRAM (SDRAM), or the like) and non-volatile memory (for example, a one-time programmable read-only memory (OTPROM), a programmable ROM (PROM), an erasable PROM (EPROM), an electronically erasable PROM (EEPROM), a mask ROM, a flash ROM, a flash memory, a hard disc drive, or a solid-state drive (SSD)). The external memory 1634 may include a flash drive, for example, a compact flash (CF), a secure digital (SD), a Micro-SD, a Mini-SD, an eXtreme digital (xD), a multi-media card (MMC), a memory stick, and the like. The external memory 1634 may be functionally and/or physically connected to the electronic device 1601 through various interfaces.

The sensor module 1640 may, for example, measure a physical quantity or detect the state of operation of the electronic device 1601 and may convert the measured or detected information into an electrical signal. The sensor module 1640 may include, for example, at least one of a gesture sensor 1640A, a gyro sensor 1640B, an atmospheric pressure sensor 1640C, a magnetic sensor 1640D, an acceleration sensor 1640E, a grip sensor 1640F, a proximity sensor 1640G, a color sensor 1640H (for example, a red, green, blue (RGB) sensor), a biometric sensor 16401, a temperature/humidity sensor 1640J, an illumination sensor 1640K, and an ultraviolet (UV) sensor 1640M. Additionally or alternatively, the sensor module 1640 may include, for example, an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1640 may further include a control circuit for controlling one or more sensors included therein. In some embodiments, the electronic device 1601 may further include a processor configured to control the sensor module 1640 as a part of or separately from the AP 1610, and may control the sensor module 1640 while the AP 1610 is in a sleep state.

The input device 1650 may include, for example, a touch panel 1652, a (digital) pen sensor 1654, a key 1656, or an ultrasonic input device 1658. The touch panel 1652 may be, for example, at least one of a capacitive type, a resistive type, an infrared type, and an ultrasonic type. Furthermore, the touch panel 1652 may further include a control circuit. The touch panel 1652 may further include a tactile layer to provide a tactile reaction to a user. The (digital) pen sensor 1654 may include, for example, a recognition sheet that is a part of, or separate from, the touch panel. The key 1656 may include, for example, a physical button, an optical key, or a keypad. The ultrasonic input device 1658 may detect ultrasonic waves, which are generated by an input tool, through a microphone (for example, a microphone 1688) to identify data corresponding to the detected ultrasonic waves.

The display 1660 (for example, the display 1560) may include a panel 1662, a hologram device 1664, a projector 1666, and/or a control circuit for controlling the same. The panel 1662 may be implemented to be, for example, flexible, transparent, or wearable. The panel 1662, together with the touch panel 1652, may be configured as one or more modules. According to an embodiment, the panel 1662 may include a pressure sensor (or a POS sensor) which may measure the strength of pressure of a user's touch. The pressure sensor may be implemented so as to be integrated with the touch panel 1652 or may be implemented as one or more sensors separate from the touch panel 1652. The hologram device 1664 may show a three-dimensional image in the air using light interference. The projector 1666 may display an image by projecting light onto a screen. The screen may be located, for example, in the interior of, or on the exterior of, the electronic device 1601. The interface 1670 may include, for example, an HDMI 1672, a USB 1674, an optical interface 1676, or a D-subminiature (D-sub) interface 1678. The interface 1670 may be included in, for example, the communication interface 1570 illustrated in FIG. 15. Additionally or alternatively, the interface 1670 may, for example, include a mobile high-definition link (MHL) interface, a secure SD card/multi-media card (MMC) interface, or an infrared data association (IrDA) standard interface.

The audio module 1680 may convert, for example, sound into an electrical signal, and vice versa. At least some elements of the audio module 1680 may be included, for example, in the input/output interface 1550 illustrated in FIG. 15. The audio module 1680 may process sound information that is input or output through, for example, a speaker 1682, a receiver 1684, earphones 1686, the microphone 1688, and the like. The camera module 1691 is a device that can take a still image and a moving image. According to an embodiment, the camera module 1691 may include one or more image sensors (for example, a front sensor or a rear sensor), a lens, an image signal processor (ISP), or a flash (for example, an LED or xenon lamp). The power management module 1695 may manage, for example, the power of the electronic device 1601. According to an embodiment, the power management module 1695 may include a power management integrated circuit (PMIC), a charger IC, or a battery or fuel gauge. The PMIC may use a wired and/or wireless charging method. Examples of the wireless charging method may include a magnetic resonance method, a magnetic induction method, an electromagnetic-wave method, and the like. Additional circuits (for example, a coil loop, a resonance circuit, a rectifier, and the like) for wireless charging may be further included. The battery gauge may measure, for example, the remaining charge of the battery 1696 and a voltage, current, or temperature while charging. The battery 1696 may include, for example, a rechargeable battery and/or a solar battery.

The indicator 1697 may display a particular state, for example, a booting state, a message state, a charging state, or the like of the electronic device 1601 or a part of the electronic device 1601 (for example, the processor 1610). The motor 1698 may convert an electrical signal into a mechanical vibration and may generate a vibration, a haptic effect, or the like. The electronic device 1601 may include a mobile TV support device (for example, GPU) that may process media data according to a standard such as digital multimedia broadcasting (DMB), digital video broadcasting (DVB), mediaFlo™, and the like. Each of the above-described component elements of hardware according to the present disclosure may be configured with one or more components, and the names of the corresponding component elements may vary based on the type of electronic device. In various embodiments, an electronic device (for example, the electronic device 1601) may omit some elements or may further include additional elements, or some of the elements of the electronic device may be combined with each other to configure one entity, in which case the electronic device may identically perform the functions of the corresponding elements prior to the combination thereof.

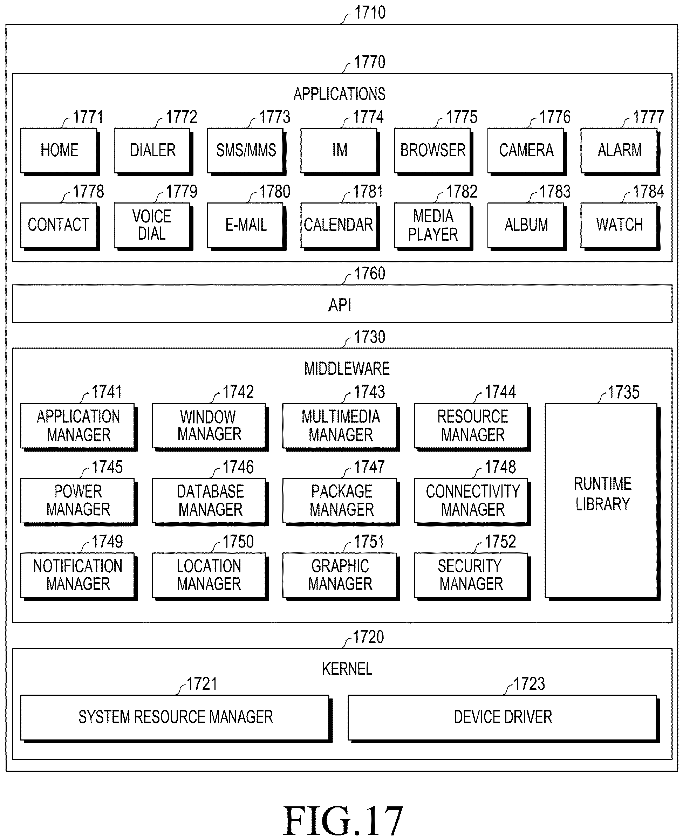

FIG. 17 is a block diagram of a program module according to an embodiment of the present disclosure.

Referring to FIG. 17, a program module 1710 (for example, the program 1540) may include an operating system (OS) for controlling resources related to an electronic device (for example, the electronic device 100, the electronic device 1501, or the electronic device 1601) and/or various applications (for example, the application programs 1547) executed on the OS. The OS may include, for example, Android™, iOS™, Windows™, Symbian™, Tizen™, or Bada™. Referring to FIG. 17, the program module 1710 may include a kernel 1720 (for example, the kernel 1541), middleware 1730 (for example, the middleware 1543), an API 1760 (for example, the API 1545), and/or applications 1770 (for example, the application programs 1547). At least a part of the program module 1710 may be preloaded on the electronic device, or may be downloaded from an external electronic device (for example, the electronic device 1502 or 1504 or the server 1506).

The kernel 1720 may include, for example, a system resource manager 1721 and/or a device driver 1723. The system resource manager 1721 may control, allocate, or retrieve system resources. According to an embodiment, the system resource manager 1721 may include a process manager, a memory manager, or a file system manager. The device driver 1723 may include, for example, a display driver, a camera driver, a Bluetooth driver, a shared memory driver, a USB driver, a keypad driver, a Wi-Fi driver, an audio driver, or an inter-process communication (IPC) driver. The middleware 1730 may provide, for example, a function required by the applications 370 in common, or may provide various functions to the applications 1770 through the API 1760 such that the applications 1770 can efficiently use the limited system resources within the electronic device. According to an embodiment, the middleware 1730 may include at least one of a runtime library 1735, an application manager 1741, a window manager 1742, a multi-media manager 1743, a resource manager 1744, a power manager 1745, a database manager 1746, a package manager 1747, a connectivity manager 1748, a notification manager 1749, a location manager 1750, a graphic manager 1751, and a security manager 1752.

The runtime library 1735 may include, for example, a library module that a compiler uses in order to add a new function through a programming language while the applications 1770 are being executed. The runtime library 1735 may manage input/output, manage memory, or process an arithmetic function. The application manager 1741 may manage, for example, the life cycles of the applications 1770. The window manager 1742 may manage GUI resources used for a screen. The multimedia manager 1743 may identify formats required for reproducing various media files and may encode or decode a media file using a codec suitable for the corresponding format. The resource manager 1744 may manage the source code of the applications 1770 or space in memory. The power manager 1745 may manage, for example, the capacity or power of a battery and may provide power information required in order to operate the electronic device. According to an embodiment, the power manager 1745 may operate in conjunction with a basic input/output system (BIOS). The database manager 1746 may, for example, generate, search, or change databases to be used by the applications 1770. The package manager 1747 may manage the installation or update of an application that is distributed in the form of a package file.

The connectivity manager 1748 may manage, for example, a wireless connection. The notification manager 1749 may provide an event (for example, an arrival message, an appointment, a proximity notification, or the like) to a user. The location manager 1750 may manage, for example, the location information of the electronic device. The graphic manager 1751 may manage a graphic effect to be provided to a user and a user interface relating to the graphic effect. The security manager 1752 may provide, for example, system security or user authentication. According to an embodiment, the middleware 1730 may include a telephony manager for managing a voice or video call function of the electronic device or a middleware module that is capable of forming a combination of the functions of the above-described elements. According to an embodiment, the middleware 1730 may provide specialized modules depending on the OS. Furthermore, the middleware 1730 may dynamically remove some existing elements, or may add new elements. The API 1760 is, for example, a set of API programming functions, and may be provided with different configurations depending on the OS. For example, in the case of Android or iOS, one API set may be provided for each platform, and in the case of Tizen, two or more API sets may be provided for each platform.

The applications 1770 may include, for example, a home application 1171, a dialer application 1772, a short message service (SMS)/multimedia message service (MMS) application 1773, an instant messaging (IM) application 1774, a browser application 1775, a camera application 1776, an alarm application 1777, a contact application 1778, a voice-dial application 1779, an e-mail application 1780, a calendar application 1781, a media player application 1782, an album application 1783, a watch application 1784, a health-care application (for example, for measuring exercise quantity or blood glucose), an environment information (for example, atmospheric pressure, humidity, or temperature information) provision application, and the like. According to an embodiment, the applications 1770 may include an information exchange application that can support the exchange of information between the electronic device and an external electronic device. The information exchange application may include, for example, a notification relay application for relaying particular information to an external electronic device or a device management application for managing an external electronic device. For example, the notification relay application may relay notification information generated in the other applications of the electronic device to an external electronic device, or may receive notification information from an external electronic device and provide the received notification information to a user. The device management application may install, delete, or update the functions (for example, turning on/off the external electronic device itself (or some elements thereof) or adjusting the brightness (or resolution) of a display) of an external electronic device that communicates with the electronic device or applications executed in the external electronic device. According to an embodiment, the applications 1770 may include applications (for example, a health care application of a mobile medical appliance) that are designated according to the attributes of an external electronic device. According to an embodiment, the applications 1770 may include applications received from an external electronic device. At least some of the program module 1710 may be implemented (for example, executed) by software, firmware, hardware (for example, the processor 1610), or a combination of two or more thereof, and may include a module, a program, a routine, an instruction set, or a process for performing one or more functions.

The term "module" as used herein may include a unit consisting of hardware, software, or firmware, and may, for example, be used interchangeably with the term "logic", "logical block", "component", "circuit", or the like. The "module'" may be an integrated component, or a minimum unit for performing one or more functions or a part thereof. The "module" may be mechanically or electronically implemented and may include, for example, an application-specific integrated circuit (ASIC) chip, a field-programmable gate arrays (FPGA), or a programmable-logic device, which has been known or are to be developed in the future, for performing certain operations. At least some of devices (e.g., modules or functions thereof) or methods (e.g., operations) according to various embodiments may be implemented by an instruction which is stored a computer-readable storage medium (e.g., the memory 1530) in the form of a program module. The instruction, when executed by a processor (e.g., the processor 1520), may cause the one or more processors to execute the function corresponding to the instruction. The computer-readable storage medium may include a hard disk, a floppy disk, a magnetic medium (e.g., a magnetic tape), an Optical Media (e.g., compact disc ROM (CD-ROM), digital versatile disc (DVD)), a Magneto-Optical Media (e.g., a floptical disk), an inner memory, etc. The instruction may include a code made by a complier or a code that can be executed by an interpreter. The instruction may include a code made by a complier or a code that can be executed by an interpreter. Operations performed by a module, a programming module, or other elements according to various embodiments may be executed sequentially, in parallel, repeatedly, or in a heuristic manner. At least some operations may be executed according to another sequence, may be omitted, or may further include other operations.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (100) for controlling an external device (200) remotely, the electronic device (100) comprising:
a display (190, 310) for displaying one or more images;
a memory (330); and
at least one processor (320) electrically connected to the display (190, 310) and the memory (330),
wherein the at least one processor (320) is configured to:
control the display (190, 310) to display a first image in a first region of the display (190, 310), the first image being stored in the memory (330),
receive, from a user, a first input for selecting the first image,
in response to receiving the first input, control the display (190, 310) to display a second image, which is identical to the first image but smaller than the first image, in second region of the display (190, 310) different from the first region of the display (190, 310),
identify, based on information on a photographing location corresponding to at least one image displayed in the second region, at least one point of a moving path of the external device, and
transmit, to the external device (200), information regarding the identified at least one point of the moving path of the external device (200),
wherein the at least one processor (320) is further configured to:
receive, from the user, a second input for deselecting the second image, and
in response to receiving the second input, control the display (190, 310) to stop displaying the second image in the second region and remove a photographing location of the first image associated with the second image from the moving path of the external device (200).

2. The electronic device of claim 1, wherein the at least one processor (320) is further configured to identify photography information contained in the first image selected based on the first input for selecting the first image, and the photography information includes at least one of an aperture value, an exposure time, sensitivity, a viewing angle, zoom magnification information, or the photographing location of the first image, which are set at a time of taking the first image.

3. The electronic device of claim 1, wherein the at least one processor (320) is further configured to:
enlarge an magnification of one point of the first image based on an external signal input and display the first image including the enlarged point on the display (190, 310), and
change one point of the moving path of the external device (200) based on the enlargement magnification.

4. The electronic device of claim 1, wherein the at least one processor (320) is further configured to:
reduce an magnification of one point of the first image based on an external signal input and display the first image including the reduced point on the display (190, 310), and
change one point of the moving path of the external device based on the reduction magnification.

5. The electronic device of claim 1, wherein in response to receiving the first input, the at least one processor (320) is further configured to control the display (190, 310) to display the second image in the second region and to display, using a map application, the photographing location of the first image associated with the second image in a third region of the display while displaying at least a part of the first image in at least a part of the first region.

6. The electronic device of claim 1, wherein the at least one processor (320) is further configured to control the display (190, 310) to display a user interface for selecting an option to photograph an image at the photographing location at which the first image is taken based on an external signal input.

7. The electronic device of claim 1, wherein, when the first image is a moving image, the at least one processor (320) is further configured to identify photography information contained in a frame of the first image being displayed on the display (190, 310) in response to the first input for selecting the first image.

8. A method of controlling an electronic device (100) for controlling remotely an external device (200), the method comprising:
controlling a display (190, 310) to display a first image in a first region of the display (190, 310), the first image being stored in a memory (330);
receiving, from a user, a first input for selecting the first image;
in response to receiving the first input, controlling the display (190, 310) to display a second image, which is identical to the first image but smaller than the first image, in a second region of the display (190, 310) different from the first region of the display (190, 310);
identifying, based on information on a photographing location corresponding to at least one image displayed in the second region, at least one point of a moving path of the external device; and
transmitting, to the external device (200), information regarding the identified at least one point of the moving path of the external device (200),
wherein the method further comprises:
receiving, from the user, a second input for deselecting the second image; and
in response to receiving the second input, controlling the display (190, 310) to stop displaying the second image in the second region and removing a photographing location of the first image associated with the second image from the moving path of the external device (200).

9. The method of claim 8, further comprising identifying photography information contained in the first image selected based on the first input for selecting the first image,
wherein the photography information includes at least one of an aperture value, an exposure time, a sensitivity, a viewing angle, zoom magnification information, or the photographing location of the first image, which are set at a time of taking the first image.

10. The method of claim 8, wherein the displaying of the first image on the display (190, 310) comprises:
enlarging an magnification of one point of the first image based on an external signal input and controlling the display (190, 310) to display the first image including the enlarged point, and
changing one point of the moving path of the external device (200) based on the enlargement magnification.

11. The method of claim 8, wherein the displaying of the first image on the display (190, 310) comprises:
reducing an magnification of one point of the first image based on an external signal input and controlling the display (190, 310) to display the first image including the reduced point, and
changing one point of the moving path of the external device based on the reduction magnification.

## Patentansprüche

1. Elektronische Vorrichtung (100) zur Fernsteuerung einer externen Vorrichtung (200), wobei die elektronische Vorrichtung (100) folgendes umfasst:
ein Display (190, 310) zum Anzeigen eines oder mehrerer Bilder;
einen Speicher (330); und
mindestens einen Prozessor (320), der mit dem Display (190, 310) und dem Speicher (330) elektrisch verbunden ist;
wobei der mindestens eine Prozessor (320) für folgende Zwecke gestaltet ist:
Steuern des Displays (190, 310) zum Anzeigen eines ersten Bilds in einem ersten Bereich des Displays (190, 310), wobei das erste Bild in dem Speicher (330) gespeichert wird;
Empfangen einer ersten Eingabe zur Auswahl des ersten Bilds von einem Benutzer;
als Reaktion auf das Empfangen der ersten Eingabe, Steuern des Displays (190, 310) zum Anzeigen eines zweiten Bilds, das zu dem ersten Bild identisch ist, aber kleiner ist als das erste Bild, in einem zweiten Bereich des Displays (190, 310), der sich von dem ersten Bereich des Displays (190, 310) unterscheidet;
auf der Basis von Informationen über einen Fotoaufnahmestandort, der mindestens einem angezeigten Bild entspricht, Identifizieren mindestens eines Punkts eines Bewegungspfads der externen Vorrichtung in dem zweiten Bereich; und
Übermitteln von Informationen über den identifizierten mindestens einen Punkt des Bewegungspfads der externen Vorrichtung (200) an die externe Vorrichtung (200);
wobei der mindestens eine Prozessor (320) ferner für folgende Zwecke gestaltet ist:
Empfangen einer zweiten Eingabe zur Abwahl des zweiten Bilds von dem Benutzer; und
als Reaktion auf das Empfangen der zweiten Eingabe, Steuern des Displays (190, 310) zum Anhalten der Anzeige des zweiten Bilds in dem zweiten Bereich und zum Entfernen eines Fotoaufnahmestandorts des ersten Bilds, der dem zweiten Bild zugeordnet ist, aus dem Bewegungspfad der externen Vorrichtung (200).

2. Elektronische Vorrichtung nach Anspruch 1, wobei der mindestens eine Prozessor (320) ferner so gestaltet ist, dass er Fotoaufnahmeinformationen identifiziert, die in dem ersten Bild enthalten sind, ausgewählt auf der Basis der ersten Eingabe zur Auswahl des ersten Bilds, und wobei die Fotoaufnahmeinformationen mindestens eines der folgenden enthalten: einen Blendenwert, eine Belichtungszeit, Empfindlichkeit, einen Betrachtungswinkel, Informationen über die Zoomvergrößerung, oder den Fotoaufnahmestandort des ersten Bilds, die zu einem Zeitpunkt der Aufnahme des ersten Bilds eingestellt werden.

3. Elektronische Vorrichtung nach Anspruch 1, wobei der mindestens eine Prozessor (320) ferner für folgende Zwecke gestaltet ist:
Vergrößern einer Vergrößerung eines Punkts des ersten Bilds auf der Basis einer externen Signaleingabe, und Anzeigen des ersten Bilds, das den vergrößerten Punkt enthält, auf dem Display (190, 310); und
Ändern eines Punkts des Bewegungspfads der externen Vorrichtung (200) auf der Basis der vergrößerten Vergrößerung.

4. Elektronische Vorrichtung nach Anspruch 1, wobei der mindestens eine Prozessor (320) ferner für folgende Zwecke gestaltet ist:
Verkleinern einer Vergrößerung eines Punkts des ersten Bilds auf der Basis einer externen Signaleingabe, und Anzeigen des ersten Bilds, das den verkleinerten Punkt enthält, auf dem Display (190, 310); und
Ändern eines Punkts des Bewegungspfads der externen Vorrichtung auf der Basis der verkleinerten Vergrößerung.

5. Elektronische Vorrichtung nach Anspruch 1, wobei der mindestens eine Prozessor (320) ferner so gestaltet ist, dass er als Reaktion auf den Empfang der ersten Eingabe das Display (190, 310) so steuert, dass das zweite Bild in dem zweiten Bereich angezeigt wird, und zum Anzeigen des Fotoaufnahmestandorts des ersten Bilds, das dem zweiten Bild zugeordnet ist, unter Verwendung einer Kartenapplikation in einem dritten Bereich des Displays, während wenigstens ein Teil des ersten Bilds in wenigstens einem Teil des ersten Bereichs angezeigt wird.

6. Elektronische Vorrichtung nach Anspruch 1, wobei der mindestens eine Prozessor (320) ferner so gestaltet ist, dass er das Display (190, 310) so steuert, dass es eine Benutzeroberfläche zur Auswahl einer Option für die Aufnahme eines Bilds an dem Fotoaufnahmestandort anzeigt, an dem das erste Bild aufgenommen wird, auf der Basis einer externen Signaleingabe.

7. Elektronische Vorrichtung nach Anspruch 1, wobei, wenn es sich bei dem ersten Bild um ein bewegtes Bild handelt, der mindestens eine Prozessor (320) ferner so gestaltet ist, dass er in einem Frame des auf dem Display (190, 310) angezeigten ersten Bilds enthaltene Fotoaufnahmeinformationen als Reaktion auf die erste Eingabe zur Auswahl des ersten Bilds identifiziert.

8. Verfahren zur Steuerung einer elektronischen Vorrichtung (100) zur Fernsteuerung einer externen Vorrichtung (200), wobei das Verfahren folgendes umfasst:
Steuern eines Displays (190, 310) zum Anzeigen eines ersten Bilds in einem ersten Bereich des Displays (190, 310), wobei das erste Bild in einem Speicher (330) gespeichert ist;
Empfangen einer ersten Eingabe zur Auswahl des ersten Bilds von einem Benutzer;
als Reaktion auf das Empfangen der ersten Eingabe, Steuern des Displays (190, 310) zum Anzeigen eines zweiten Bilds, das zu dem ersten Bild identisch ist, aber kleiner ist als das erste Bild, in einem zweiten Bereich des Displays (190, 310), der sich von dem ersten Bereich des Displays (190, 310) unterscheidet;
auf der Basis von Informationen über einen Fotoaufnahmestandort, der mindestens einem angezeigten Bild entspricht, Identifizieren mindestens eines Punkts eines Bewegungspfads der externen Vorrichtung in dem zweiten Bereich; und
Übermitteln von Informationen über den identifizierten mindestens einen Punkt des Bewegungspfads der externen Vorrichtung (200) an die externe Vorrichtung (200);
wobei das Verfahren ferner folgendes umfasst:
Empfangen einer zweiten Eingabe zur Abwahl des zweiten Bilds von dem Benutzer; und
als Reaktion auf das Empfangen der zweiten Eingabe, Steuern des Displays (190, 310) zum Anhalten der Anzeige des zweiten Bilds in dem zweiten Bereich und zum Entfernen eines Fotoaufnahmestandorts des ersten Bilds, der dem zweiten Bild zugeordnet ist, aus dem Bewegungspfad der externen Vorrichtung (200).

9. Verfahren nach Anspruch 8, ferner umfassend das Identifizieren von Fotoaufnahmeinformationen, die in dem ersten Bild enthalten sind, ausgewählt auf der Basis der ersten Eingabe zur Auswahl des ersten Bilds,
wobei die Fotoaufnahmeinformationen mindestens eines der folgenden enthalten: einen Blendenwert, eine Belichtungszeit, Empfindlichkeit, einen Betrachtungswinkel, Informationen über die Zoomvergrößerung, oder den Fotoaufnahmestandort des ersten Bilds, die zu einem Zeitpunkt der Aufnahme des ersten Bilds eingestellt werden.

10. Verfahren nach Anspruch 8, wobei das Anzeigen des ersten Bilds auf dem Display (190, 310) folgendes umfasst:
Vergrößern einer Vergrößerung eines Punkts des ersten Bilds auf der Basis einer externen Signaleingabe, und Steuern des Displays (190, 310) zum Anzeigen des ersten Bilds, das den vergrößerten Punkt enthält; und
Ändern eines Punkts des Bewegungspfads der externen Vorrichtung (200) auf der Basis der vergrößerten Vergrößerung.

11. Verfahren nach Anspruch 8, wobei das Anzeigen des ersten Bilds auf dem Display (190, 310) folgendes umfasst:
Verkleinern einer Vergrößerung eines Punkts des ersten Bilds auf der Basis einer externen Signaleingabe, und Steuern des Displays (190, 310) zum Anzeigen des ersten Bilds, das den verkleinerten Punkt enthält; und
Ändern eines Punkts des Bewegungspfads der externen Vorrichtung auf der Basis der verkleinerten Vergrößerung.

## Revendications

1. Dispositif électronique (100) pour commander un dispositif externe (200) à distance, le dispositif électronique (100) comprenant :
un affichage (190, 310) pour afficher au moins une image ;
une mémoire (330) ; et
au moins un processeur (320) connecté électriquement à l'affichage (190, 310) et à la mémoire (330),
l'au moins un processeur (320) étant conçu pour :
commander à l'affichage (190, 310) d'afficher une première image dans une première région de l'affichage (190, 310), la première image étant stockée dans la mémoire (330),
recevoir, d'un utilisateur, une première entrée pour sélectionner la première image,
en réponse à la réception de la première entrée, commander l'affichage (190, 310) pour afficher une seconde image, qui est identique à la première image mais plus petite que la première image, dans une deuxième région de l'affichage (190, 310) différente de la première région de l'affichage (190, 310),
identifier, en fonction d'informations sur un lieu de photographie correspondant à au moins une image affichée dans la deuxième région, au moins un point d'un trajet de déplacement du dispositif externe, et
transmettre, au dispositif externe (200), des informations concernant l'au moins un point identifié du trajet de déplacement du dispositif externe (200),
l'au moins processeur (320) étant en outre conçu pour :
recevoir, de l'utilisateur, une seconde entrée pour désélectionner la seconde image, et
en réponse à la réception de la seconde entrée, commander à l'affichage (190, 310) d'arrêter d'afficher la seconde image dans la deuxième région et supprimer un lieu de photographie de la première image associé à la seconde image du trajet de déplacement du dispositif externe (200).

2. Dispositif électronique selon la revendication 1, l'au moins un processeur (320) étant en outre conçu pour identifier les informations de photographie contenues dans la première image sélectionnée en fonction de la première entrée pour sélectionner la première image, et les informations de photographie comprenant une valeur d'ouverture, un temps d'exposition, une sensibilité, un angle de vision, des informations de grossissement de zoom, et/ou le lieu de photographie de la première image, qui sont fixés à un moment de la prise de la première image.

3. Dispositif électronique selon la revendication 1, l'au moins un processeur (320) étant en outre conçu pour :
agrandir un grossissement d'un point de la première image en fonction d'une entrée de signal externe et afficher la première image en incluant le point agrandi sur l'affichage (190, 310), et
modifier un point de la trajectoire de déplacement du dispositif externe (200) en fonction du grossissement d'agrandissement.

4. Dispositif électronique selon la revendication 1, l'au moins un processeur (320) étant en outre conçu pour :
réduire un grossissement d'un point de la première image en fonction d'une entrée de signal externe et afficher la première image en incluant le point réduit sur l'affichage (190, 310), et
modifier un point de la trajectoire de déplacement du dispositif externe en fonction du grossissement de réduction.

5. Dispositif électronique selon la revendication 1, en réponse à la réception de la première entrée, l'au moins un processeur (320) étant en outre conçu pour commander à l'affichage (190, 310) d'afficher la seconde image dans la deuxième région et d'afficher, à l'aide d'une application cartographique, le lieu de photographie de la première image associé à la seconde image dans une troisième région de l'affichage tout en affichant l'au moins une partie de la première image dans au moins une partie de la première région.

6. Dispositif électronique selon la revendication 1, l'au moins un processeur (320) étant en outre conçu pour commander à l'affichage (190, 310) d'afficher une interface utilisateur pour sélectionner une option pour photographier une image au lieu de photographie auquel la première image est prise en fonction d'une entrée de signal externe.

7. Dispositif électronique selon la revendication 1, lorsque la première image est une image en mouvement, l'au moins un processeur (320) étant en outre conçu pour identifier les informations de photographie contenues dans un cadre de la première image affichée sur l'affichage (190, 310) en réponse à la première entrée pour sélectionner la première image.

8. Procédé de commande d'un dispositif électronique (100) pour commander à distance un dispositif externe (200), le procédé comprenant :
commande à un affichage (190, 310) d'afficher une première image dans une première région de l'affichage (190, 310), la première image étant stockée dans une mémoire (330) ;
réception, d'un utilisateur, d'une première entrée pour sélectionner la première image ;
en réponse à la réception de la première entrée, commande à l'affichage (190, 310) d'afficher une seconde image, identique à la première image mais plus petite que la première image, dans une deuxième région de l'affichage (190, 310) différente de la première région de l'affichage (190, 310) ;
identification, en fonction d'informations sur un lieu de photographie correspondant à au moins une image affichée dans la deuxième région, d'au moins un point d'un trajet de déplacement du dispositif externe ; et
transmission, au dispositif externe (200), des informations concernant l'au moins un point identifié du trajet de déplacement du dispositif externe (200), le procédé comprenant en outre :
réception, de l'utilisateur, d'une seconde entrée pour désélectionner la seconde image ; et
en réponse à la réception de la seconde entrée, commande à l'affichage (190, 310) d'arrêter l'affichage de la seconde image dans la deuxième région et suppression d'un lieu de photographie de la première image associé à la seconde image du trajet de déplacement du dispositif externe (200).

9. Procédé selon la revendication 8, comprenant en outre l'identification des informations de photographie contenues dans la première image sélectionnée en fonction de la première entrée pour sélectionner la première image,
les informations de photographie comprenant au moins une valeur d'ouverture, un temps d'exposition, une sensibilité, un angle de vision, des informations de grossissement du zoom et/ou le lieu de photographie de la première image, qui sont fixés à un moment de la prise de la première image.

10. Procédé selon la revendication 8, l'affichage de la première image sur l'affichage (190, 310) comprenant :
agrandissement d'un grossissement d'un point de la première image en fonction d'une entrée de signal externe et commande à l'affichage (190, 310) d'afficher la première image comprenant le point agrandi, et
modification d'un point de la trajectoire de déplacement du dispositif externe (200) en fonction du grossissement d'agrandissement.

11. Procédé selon la revendication 8, l'affichage de la première image sur l'affichage (190, 310) comprenant :
réduction d'un grossissement d'un point de la première image en fonction d'une entrée de signal externe et commande à l'affichage (190, 310) d'afficher la première image comprenant le point réduit, et
modification d'un point de la trajectoire de déplacement du dispositif externe en fonction du grossissement de réduction.
